(19) Europäisches Patentamt
European Patent Office
Office européen des brevets

(11) **EP 4 411 001 A1**

(12) **EUROPEAN PATENT APPLICATION**
published in accordance with Art. 153(4) EPC

(43) Date of publication:
**07.08.2024  Bulletin 2024/32**

(21) Application number: **22876450.2**

(22) Date of filing: **29.09.2022**

(51) International Patent Classification (IPC):
*C21C 7/00* (2006.01)       *C21D 8/10* (2006.01)
*C21D 9/08* (2006.01)       *C22C 38/00* (2006.01)
*C22C 38/60* (2006.01)

(52) Cooperative Patent Classification (CPC):
**C21C 7/00; C21D 8/10; C21D 9/08; C22C 38/00;
C22C 38/60**

(86) International application number:
**PCT/JP2022/036441**

(87) International publication number:
**WO 2023/054586 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2021  JP 2021162900**

(71) Applicant: NIPPON STEEL CORPORATION
Chiyoda-ku
Tokyo 100-8071 (JP)

(72) Inventors:
• **NISHIMURA, Toshiya**
  **Tokyo 100-8071 (JP)**
• **MATSUO, Daisuke**
  **Tokyo 100-8071 (JP)**
• **KANKI, Kyohei**
  **Tokyo 100-8071 (JP)**

(74) Representative: **Zimmermann & Partner
Patentanwälte mbB
Postfach 330 920
80069 München (DE)**

(54) **MARTENSITIC STAINLESS STEEL PIPE**

(57)     A martensitic stainless steel pipe that has a yield strength of 110 ksi or more and has excellent machinability is provided. A martensitic stainless steel pipe according to the present disclosure consists of, in mass%, C: less than 0.030%, Si: 1.00% or less, Mn: 1.00% or less, P: 0.030% or less, S: 0.0010 to 0.0050%, Cr: 10.00 to 14.00%, Ni: 5.00 to 7.50%, Mo: 1.10 to 3.50%, Cu: 1.00 to 3.50%, Al: 0.005 to 0.050%, N: 0.0030 to 0.0500%, V: 0.01 to 0.30%, Ti: 0.020 to 0.150%, Co: 0.01 to 0.50%, Ca: 0.0010 to 0.0050%, and the balance: Fe and impurities. The yield strength is 758 MPa or more. A number density of Ca sulfides having an equivalent circular diameter of 1.0 $\mu$m or more is 3 /mm$^2$ or more.

EP 4 411 001 A1

**Description**

TECHNICAL FIELD

The present disclosure relates to a steel pipe, and more particularly to a martensitic stainless steel pipe.

BACKGROUND ART

Oil wells or gas wells (hereinafter, oil wells and gas wells are collectively referred to simply as "oil wells") contain hydrogen sulfide gas ($H_2S$), carbon dioxide gas ($CO_2$), or the like that is corrosive. Here, it is known that chromium (Cr) is effective for improving the $CO_2$ gas corrosion resistance of a steel material. Therefore, in oil wells in environments containing a large amount of $CO_2$ gas, martensitic stainless steel materials containing about 13% by mass of Cr that are typified by API L80 13Cr steel material (normal 13Cr steel material) and Super 13Cr steel material in which the content of C is reduced are used according to the partial pressure and temperature of the carbon dioxide gas.

In recent years, oil wells are being made deeper, and consequently there is a demand to enhance the strength of oil-well steel pipes. Specifically, oil-well steel pipes of 80 ksi grade (yield strength is 80 to less than 95 ksi, that is, 552 to less than 655 MPa) and 95 ksi grade (yield strength is 95 to less than 110 ksi, that is, 655 to less than 758 MPa) are being widely utilized. Furthermore, recently oil-well steel pipes of 110 ksi grade or more (yield strength is 758 MPa or more) have also started to be demanded.

Japanese Patent Application Publication No. 2002-241902 (Patent Literature 1), Japanese Patent Application Publication No. 2009-120954 (Patent Literature 2), and International Application Publication No. WO2017/168874 (Patent Literature 3) each propose a steel material in which the yield strength is increased.

The steel material disclosed in Patent Literature 1 is a martensitic stainless steel which consists of, in mass%, C: 0.08% or less, Si: 1% or less, Mn: 0.1 to 2%, Cr: 7 to 15%, Ni: 0.5 to 7%, Nb: 0.005 to 0.5%, Al: 0.001 to 0.1%, N: 0.001 to 0.05%, P: 0.04% or less, and S: 0.005% or less, with the balance being substantially Fe, and which satisfies Cr-16.6C+6Nb+0.5Ni ≥ 9.6. In addition, in this steel material, the steel microstructure in a cross section contains chromium nitrides having a size of 0.2 $\mu$m or less in an amount of $10^2$ to $10^8$ /mm$^2$. It is described in Patent Literature 1 that this steel material has a yield strength of 760 MPa or more.

The steel material disclosed in Patent Literature 2 is a martensitic stainless steel containing, in mass%, C: 0.01 to 0.1%, Si: 0.05 to 1%, Mn: 0.05 to 1.5%, P: 0.03% or less, S: 0.01% or less, Cr: 9 to 15%, Ni: 0.1 to 2.0%, Al: 0.05% or less, and N: 0.1% or less, and also containing one or more elements among Cu: 0.05 to 4%, Mo: 0.05 to 3%, V: 0.005 to 0.5%, Nb: 0.005 to 0.5%, B: 0.0002 to 0.005%, Ca: 0.0003 to 0.005%, Mg: 0.0003 to 0.005%, and REM: 0.0003 to 0.005%, with the balance being Fe and impurities. In this steel material, in addition, the thickness of a retained austenite phase in the steel is 100 nm or less, and X-ray integrated intensities $111\gamma$ and $110\alpha$ satisfy the expression 0.005 ≤ $111\gamma/(111\gamma+110\alpha)$ ≤ 0.05. It is described in Patent Literature 2 that this steel material can be applied even with respect to a yield stress of 759 MPa-class or more.

The steel material disclosed in Patent Literature 3 is a high-strength stainless steel seamless pipe for oil wells containing, in mass%, C: 0.005 to 0.05%, Si: 0.05 to 0.50%, Mn: 0.20 to 1.80%, P: 0.030% or less, S: 0.005% or less, Cr: 12.0 to 17.0%, Ni: 4.0 to 7.0%, Mo: 0.5 to 3.0%, Al: 0.005 to 0.10%, V: 0.005 to 0.20%, Co: 0.01 to 1.0%, N: 0.005 to 0.15%, and O: 0.010% or less, and satisfying Cr+0.65Ni+0.6Mo+0.55Cu-20C ≥ 15.0 and Cr+Mo+0.3Si-43.5C-0.4Mn-Ni-0.3Cu-9N ≤ 11. It is described in Patent Literature 3 that this steel material has a yield strength of 655 MPa or more.

CITATION LIST

PATENT LITERATURE

Patent Literature 1: Japanese Patent Application Publication No. 2002-241902
Patent Literature 2: Japanese Patent Application Publication No. 2009-120954
Patent Literature 3: International Application Publication No. WO2017/168874

SUMMARY OF INVENTION

TECHNICAL PROBLEM

The aforementioned Patent Literatures 1 to 3 propose techniques for increasing the yield strength of a steel material. However, a martensitic stainless steel pipe that has a yield strength of 758 MPa or more (110 ksi or more) may be obtained by a technique other than the techniques proposed in the aforementioned Patent Literatures 1 to 3.

In this connection, a martensitic stainless steel pipe assumed to be used as an oil-well steel pipe may in some cases be subjected to cutting work. For example, a martensitic stainless steel pipe may be subjected to cutting work to adjust the dimensions of the steel pipe. In addition, for example, a martensitic stainless steel pipe may be subjected to cutting work to form a threaded connection for connecting pipes together at a leading end of the steel pipe. Therefore, it is preferable for a martensitic stainless steel pipe to not only have high strength but also to be excellent in machinability. However, in the aforementioned Patent Literatures 1 to 3, no consideration is given to the machinability of a martensitic stainless steel pipe.

An objective of the present disclosure is to provide a martensitic stainless steel pipe that has a high yield strength and excellent machinability.

SOLUTION TO PROBLEM

A martensitic stainless steel pipe according to the present disclosure consists of, in mass%,

C: less than 0.030%,
Si: 1.00% or less,
Mn: 1.00% or less,
P: 0.030% or less,
S: 0.0010 to 0.0050%,
Cr: 10.00 to 14.00%,
Ni: 5.00 to 7.50%,
Mo: 1.10 to 3.50%,
Cu: 1.00 to 3.50%,
Al: 0.005 to 0.050%,
N: 0.0030 to 0.0500%,
V: 0.01 to 0.30%,
Ti: 0.020 to 0.150%,
Co: 0.01 to 0.50%,
Ca: 0.0010 to 0.0050%,
Nb: 0 to 0.15%,
W: 0 to 1.50%,
Sn: 0 to 0.0100%,
As: 0 to 0.0100%,
Sb: 0 to 0.0100%,
B: 0 to 0.0050%,
Mg: 0 to 0.0050%,
rare earth metal: 0 to 0.0100%, and
the balance: Fe and impurities,
wherein:

a microstructure consists of, in volume percent, retained austenite in an amount of 0 to 15% and ferrite in an amount of 0 to 5%, with the balance being tempered martensite;
a yield strength is 758 MPa or more; and
a number density of Ca sulfides in which a content of Ca is 20% by mass or more and a content of S is 10% by mass or more and which have an equivalent circular diameter of 1.0 $\mu$m or more is 3 /mm$^2$ or more.

ADVANTAGEOUS EFFECTS OF INVENTION

The martensitic stainless steel pipe according to the present disclosure has a high yield strength and has excellent machinability.

DESCRIPTION OF EMBODIMENTS

First, the present inventors conducted studies from the viewpoint of the chemical composition with respect to a martensitic stainless steel pipe in which both a high yield strength and excellent machinability can be compatibly obtained. As a result, the present inventors considered that if a martensitic stainless steel pipe consists of, in mass%, C: less than 0.030%, Si: 1.00% or less, Mn: 1.00% or less, P: 0.030% or less, S: 0.0010 to 0.0050%, Cr: 10.00 to 14.00%,

Ni: 5.00 to 7.50%, Mo: 1.10 to 3.50%, Cu: 1.00 to 3.50%, Al: 0.005 to 0.050%, N: 0.0030 to 0.0500%, V: 0.01 to 0.30%, Ti: 0.020 to 0.150%, Co: 0.01 to 0.50%, Ca: 0.0010 to 0.0050%, Nb: 0 to 0.15%, W: 0 to 1.50%, Sn: 0 to 0.0100%, As: 0 to 0.0100%, Sb: 0 to 0.0100%, B: 0 to 0.0050%, Mg: 0 to 0.0050%, rare earth metal: 0 to 0.0100%, and the balance: Fe and impurities, there is a possibility that both a yield strength of 110 ksi or more (758 MPa or more) and excellent machinability can be compatibly obtained.

Next, the present inventors conducted studies regarding the microstructure of a martensitic stainless steel pipe having the chemical composition described above. As a result, the present inventors found that in a case where the microstructure of a martensitic stainless steel pipe having the chemical composition described above consists of retained austenite in an amount of 0 to 15% by volume and ferrite in an amount of 0 to 5% by volume with the balance being tempered martensite, the yield strength of the steel pipe can be raised to 110 ksi or more. Note that, in the present description, the phrase "consist of retained austenite, ferrite, and tempered martensite" means that the amount of any phase other than retained austenite, ferrite, and tempered martensite is negligibly small.

In other words, if a martensitic stainless steel pipe has the chemical composition and microstructure described above, there is a possibility that a yield strength of 110 ksi or more can be obtained. Here, there is a tendency for the machinability of a steel material to be liable to decrease if the strength of the steel material is increased. That is, there is a risk that the machinability of a martensitic stainless steel pipe having the aforementioned chemical composition and microstructure will decrease as a result of raising the yield strength to 110 ksi or more. Here, when the machinability of a steel pipe decreases, a cutting tool used during cutting work will wear easily. In such a case, the frequency for replacing the cutting tool used for the cutting work will increase, and the productivity will decrease. Therefore, the present inventors investigated various techniques for increasing the machinability of a martensitic stainless steel pipe having the aforementioned chemical composition and the aforementioned microstructure, while maintaining the yield strength. Note that, in the present description the phrase "machinability is high" means that the service life of the cutting tool is long.

The present inventors found that among inclusions which remain in a martensitic stainless steel pipe having the aforementioned chemical composition and microstructure, in particular Ca sulfides which are mainly composed of calcium (Ca) and sulfur (S) contribute to enhancing the machinability while maintaining the yield strength of the aforementioned martensitic stainless steel pipe. Here, particles in which the content of Ca is 20% by mass or more and the content of S is 10% by mass or more are defined as "Ca sulfides". Based on this finding, the present inventors conducted detailed studies regarding the size and number density of Ca sulfides that can enhance the machinability of a martensitic stainless steel pipe having the aforementioned chemical composition and microstructure.

As a result, the present inventors discovered that in a martensitic stainless steel pipe having the aforementioned chemical composition and microstructure, if the number density of Ca sulfides having an equivalent circular diameter of 1.0 $\mu$m or more is 3 /mm$^2$ or more, a yield strength of 110 ksi or more and excellent machinability can both be compatibly obtained. Therefore, the martensitic stainless steel pipe according to the present embodiment satisfies the chemical composition described above, has a microstructure consisting of retained austenite in an amount of 0 to 15% by volume and ferrite in an amount of 0 to 5% by volume with the balance being tempered martensite, and a number density of Ca sulfides in which a content of Ca is 20% by mass or more and a content of S is 10% by mass or more and which have an equivalent circular diameter of 1.0 $\mu$m or more is made 3 /mm$^2$ or more. As a result, the martensitic stainless steel pipe according to the present embodiment has a yield strength of 110 ksi or more and has excellent machinability.

The gist of the martensitic stainless steel pipe according to the present embodiment, which has been completed based on the above findings, is as follows.

[1] A martensitic stainless steel pipe consisting of, in mass%,

C: less than 0.030%,
Si: 1.00% or less,
Mn: 1.00% or less,
P: 0.030% or less,
S: 0.0010 to 0.0050%,
Cr: 10.00 to 14.00%,
Ni: 5.00 to 7.50%,
Mo: 1.10 to 3.50%,
Cu: 1.00 to 3.50%,
Al: 0.005 to 0.050%,
N: 0.0030 to 0.0500%,
V: 0.01 to 0.30%,
Ti: 0.020 to 0.150%,
Co: 0.01 to 0.50%,

Ca: 0.0010 to 0.0050%,
Nb: 0 to 0.15%,
W: 0 to 1.50%,
Sn: 0 to 0.0100%,
As: 0 to 0.0100%,
Sb: 0 to 0.0100%,
B: 0 to 0.0050%,
Mg: 0 to 0.0050%,
rare earth metal: 0 to 0.0100%, and
the balance: Fe and impurities,
wherein:

a microstructure consists of, in volume percent, retained austenite in an amount of 0 to 15% and ferrite in an amount of 0 to 5%, with the balance being tempered martensite;
a yield strength is 758 MPa or more; and
a number density of Ca sulfides in which a content of Ca is 20% by mass or more and a content of S is 10% by mass or more and which have an equivalent circular diameter of 1.0 $\mu$m or more is 3 /mm$^2$ or more.

[2] The martensitic stainless steel pipe according to [1], containing one or more elements selected from a group consisting of:

Nb: 0.01 to 0.15%,
W: 0.01 to 1.50%,
Sn: 0.0001 to 0.0100%,
As: 0.0001 to 0.0100%,
Sb: 0.0001 to 0.0100%,
B: 0.0001 to 0.0050%,
Mg: 0.0001 to 0.0050%, and
rare earth metal: 0.0001 to 0.0100%.

[3] The martensitic stainless steel pipe according to [1] or [2], containing:

Cu: 1.50 to 3.50%,
wherein an area fraction of Cu precipitates with an area of 0.20 $\mu$m$^2$ or more is more than 0.10 to 0.50%.

[4] The martensitic stainless steel pipe according to any one of [1] to [3], containing one or more elements selected from a group consisting of:

Nb: 0.01 to 0.15%, and
W: 0.01 to 1.50%.

[5] The martensitic stainless steel pipe according to any one of [1] to [4], containing one or more elements selected from a group consisting of:

Sn: 0.0001 to 0.0100%,
As: 0.0001 to 0.0100%, and
Sb: 0.0001 to 0.0100%.

[6] The martensitic stainless steel pipe according to any one of [1] to [5], containing one or more elements selected from a group consisting of:

B: 0.0001 to 0.0050%,
Mg: 0.0001 to 0.0050%, and
rare earth metal: 0.0001 to 0.0100%.

The martensitic stainless steel pipe according to the present embodiment is described in detail below. Note that, the symbol"%" relating to an element means "mass percent" unless otherwise noted.

[Chemical composition]

The chemical composition of the martensitic stainless steel pipe according to the present embodiment contains the following elements.

C: less than 0.030%

Carbon (C) is unavoidably contained. That is, the lower limit of the content of C is more than 0%. C increases the hardenability of the steel material and thus increases the strength of the steel material. However, if the content of C is more than 0.030%, C will easily combine with Cr to form Cr carbides. As a result, even if the contents of other elements are within the range of the present embodiment, the toughness of the steel material will decrease. Accordingly, the content of C is to be less than 0.030%. A preferable lower limit of the content of C is 0.001%, more preferably is 0.003%, and further preferably is 0.005%. A preferable upper limit of the content of C is 0.025%, more preferably is 0.020%, and further preferably is 0.015%. The content of C is preferably as low as possible.

Si: 1.00% or less

Silicon (Si) is unavoidably contained. That is, the lower limit of the content of Si is more than 0%. Si deoxidizes the steel. However, if the content of Si is more than 1.00%, the hot workability of the steel material will decrease even if the contents of other elements are within the range of the present embodiment. Accordingly, the content of Si is to be 1.00% or less. A preferable lower limit of the content of Si is 0.05%, more preferably is 0.10%, further preferably is 0.15%, and further preferably is 0.20%. A preferable upper limit of the content of Si is 0.70%, more preferably is 0.50%, further preferably is 0.45%, and further preferably is 0.40%.

Mn: 1.00% or less

Manganese (Mn) is unavoidably contained. That is, the lower limit of the content of Mn is more than 0%. Mn increases the hardenability of steel material and thus increases the strength of the steel material. However, if the content of Mn is more than 1.00%, even if the contents of other elements are within the range of the present embodiment, Mn will form coarse inclusions and reduce the toughness of the steel material. Accordingly, the content of Mn is to be 1.00% or less. A preferable lower limit of the content of Mn is 0.10%, more preferably is 0.20%, and further preferably is 0.25%. A preferable upper limit of the content of Mn is 0.80%, more preferably is 0.60%, and further preferably is 0.50%.

P: 0.030% or less

Phosphorus (P) is an impurity that is unavoidably contained. That is, the lower limit of the content of P is more than 0%. If the content of P is more than 0.030%, even if the contents of other elements are within the range of the present embodiment, P will segregate to grain boundaries and cause the toughness of the steel material to markedly decrease. Accordingly, the content of P is to be 0.030% or less. A preferable upper limit of the content of P is 0.025%, and more preferably is 0.020%. The content of P is preferably as low as possible. However, excessively reducing the content of P will significantly increase the production cost. Therefore, when taking industrial production into consideration, a preferable lower limit of the content of P is 0.0001%, more preferably is 0.0005%, and further preferably is 0.001%.

S: 0.0010 to 0.0050% or less

Sulfur (S) combines with Ca in the steel material to form Ca sulfides, and thereby increases the machinability of the steel material. If the content of S is less than 0.0010%, the aforementioned advantageous effect will not be sufficiently obtained even if the contents of other elements are within the range of the present embodiment. On the other hand, if the content of S is more than 0.0050%, even if the contents of other elements are within the range of the present embodiment, S will segregate excessively to grain boundaries, and the toughness and hot workability of the steel material will markedly decrease. Accordingly, the content of S is to be 0.0010 to 0.0050% or less. A preferable lower limit of the content of S is 0.0012%, and more preferably is 0.0015%. A preferable upper limit of the content of S is 0.0045%, more preferably is 0.0040%, and further preferably is 0.0035%.

Cr: 10.00 to 14.00%

Chromium (Cr) increases the corrosion resistance of the steel material. If the content of Cr is less than 10.00%, the aforementioned advantageous effect will not be sufficiently obtained even if the contents of other elements are within the range of the present embodiment. On the other hand, if the content of Cr is more than 14.00%, Cr carbides, intermetallic compounds containing Cr, and Cr oxides will be excessively formed. In such case the corrosion resistance of the steel material will decrease even if the contents of other elements are within the range of the present embodiment. Accordingly, the content of Cr is to be 10.00 to 14.00%. A preferable lower limit of the content of Cr is 10.05%, more preferably is 10.10%, further preferably is 10.50%, and further preferably is 11.00%. A preferable upper limit of the content of Cr is 13.70%, more preferably is 13.50%, further preferably is 13.40%, and further preferably is 13.30%.

Ni: 5.00 to 7.50%

Nickel (Ni) increases the corrosion resistance of the steel material. In addition, Ni is an austenite forming element, and causes the microstructure of the steel material after quenching to become martensitic. If the content of Ni is less than 5.00%, the aforementioned advantageous effects will not be sufficiently obtained even if the contents of other elements are within the range of the present embodiment. On the other hand, if the content of Ni is more than 7.50%, the aforementioned effects will be saturated and the production cost will increase. Accordingly, the content of Ni is to be 5.00 to 7.50%. A preferable lower limit of the content of Ni is 5.10%, more preferably is 5.15%, and further preferably is 5.20%. A preferable upper limit of the content of Ni is 7.00%, more preferably is 6.80%, further preferably is 6.60%, and further preferably is 6.40%.

Mo: 1.10 to 3.50%

Molybdenum (Mo) increases the corrosion resistance of the steel material. If the content of Mo is less than 1.10%, this advantageous effect will not be sufficiently obtained even if the contents of other elements are within the range of the present embodiment. On the other hand, if the content of Mo is more than 3.50%, the aforementioned effect will be saturated and the production cost will increase. Accordingly, the content of Mo is to be 1.10 to 3.50%. A preferable lower limit of the content of Mo is 1.20%, more preferably is 1.50%, and further preferably is 1.65%. A preferable upper limit of the content of Mo is 3.30%, more preferably is 3.10%, further preferably is 2.90%, and further preferably is 2.70%.

Cu: 1.00 to 3.50%

Copper (Cu) is an austenite forming element, similarly to Ni, and causes the microstructure after quenching to become martensitic. If the content of Cu is less than 1.00%, the aforementioned advantageous effect will not be sufficiently obtained even if the contents of other elements are within the range of the present embodiment. On the other hand, if the content of Cu is more than 3.50%, the hot workability of the steel material will decrease even if the contents of other elements are within the range of the present embodiment. Accordingly, the content of Cu is to be 1.00 to 3.50%. In addition, Cu precipitates in the steel material and increases the machinability of the steel material. A preferable lower limit of the content of Cu for effectively obtaining the aforementioned advantageous effects is 1.50%, more preferably is 1.75%, and further preferably is 2.00%. A preferable upper limit of the content of Cu is 3.30%, more preferably is 3.10%, and further preferably is 3.00%.

Al: 0.005 to 0.050%

Aluminum (Al) deoxidizes the steel. If the content of Al is less than 0.005%, the aforementioned advantageous effect will not be sufficiently obtained even if the contents of other elements are within the range of the present embodiment. On the other hand, if the content of Al is more than 0.050%, even if the contents of other elements are within the range of the present embodiment, coarse Al oxides will be formed and the toughness of the steel material will decrease. Accordingly, the content of Al is to be 0.005 to 0.050%. A preferable lower limit of the content of Al is 0.006%, more preferably is 0.008%, and further preferably is 0.010%. A preferable upper limit of the content of Al is 0.047%, more preferably is 0.043%, and further preferably is 0.040%. Note that, as used in the present description, the term "content of Al" means the content of sol. Al (acid-soluble Al).

N: 0.0030 to 0.0500%

Nitrogen (N) increases the corrosion resistance of the steel material. If the content of N is less than 0.0030%, the aforementioned advantageous effect will not be sufficiently obtained even if the contents of other elements are within the range of the present embodiment. On the other hand, if the content of N is more than 0.0500%, even if the contents of other elements are within the range of the present embodiment, coarse TiN will be formed and the toughness of the steel material will decrease. Accordingly, the content of N is to be 0.0030 to 0.0500%. A preferable lower limit of the content of N is 0.0033%, more preferably is 0.0035%, and further preferably is 0.0038%. A preferable upper limit of the content of N is 0.0450%, more preferably is 0.0400%, further preferably is 0.0350%, and further preferably is 0.0300%.

V: 0.01 to 0.30%

Vanadium (V) forms precipitates (hereinafter, referred to as "V precipitates") such as carbides, nitrides, and carbo-nitrides in the steel material, and increases the strength of the steel material. If the content of V is less than 0.01%, the aforementioned advantageous effect will not be sufficiently obtained even if the contents of other elements are within the range of the present embodiment. On the other hand, if the content of V is more than 0.30%, even if the contents of other elements are within the range of the present embodiment, V precipitates will excessively form and the toughness of the steel material will decrease. Accordingly, the content of V is to be 0.01 to 0.30%. A preferable lower limit of the content of V is 0.02%, and more preferably is 0.03%. A preferable upper limit of the content of V is 0.25%, more preferably is 0.20%, further preferably is 0.15%, further preferably is 0.10%, and further preferably is 0.08%.

Ti: 0.020 to 0.150%

Titanium (Ti) combines with C or N to form carbides or nitrides. In this case, coarsening of grains is suppressed by the pinning effect, and the strength of the steel material increases. In addition, by forming carbides or nitrides, Ti suppresses the occurrence of an excessive increase in strength caused by excessive formation of V precipitates (carbides, nitrides, and carbo-nitrides). As a result, the corrosion resistance of the steel material increases. If the content of Ti is less than 0.020%, the aforementioned advantageous effects will not be sufficiently obtained even if the contents of other elements are within the range of the present embodiment. On the other hand, if the content of Ti is more than 0.150%, the aforementioned advantageous effects will be saturated. Furthermore, if the content of Ti is more than 0.150%, Ti carbides or Ti nitrides will excessively form and the toughness of the steel material will decrease. Accordingly, the content of Ti is to be 0.020 to 0.150%. A preferable lower limit of the content of Ti is 0.030%, more preferably is 0.040%, and further preferably is 0.050%. A preferable upper limit of the content of Ti is 0.140%, and more preferably is 0.130%.

Co: 0.01 to 0.50%

Cobalt (Co) increases the corrosion resistance of the steel material. Co also suppresses the formation of retained austenite, and suppresses variations in the strength of the steel material. If the content of Co is less than 0.01%, the aforementioned advantageous effects will not be sufficiently obtained even if the contents of other elements are within the range of the present embodiment. On the other hand, if the content of Co is more than 0.50%, the toughness of the steel material will decrease even if the contents of other elements are within the range of the present embodiment. Accordingly, the content of Co is to be 0.01 to 0.50%. A preferable lower limit of the content of Co is 0.02%, more preferably is 0.03%, further preferably is 0.05%, and further preferably is 0.10%. A preferable upper limit of the content of Co is 0.45%, more preferably is 0.40%, and further preferably is 0.35%.

Ca: 0.0010 to 0.0050%

Calcium (Ca) combines with S in the steel material to form Ca sulfides and thereby increases the machinability of the steel material. If the content of Ca is less than 0.0010%, the aforementioned advantageous effect will not be sufficiently obtained even if the contents of other elements are within the range of the present embodiment. On the other hand, if the content of Ca is more than 0.0050%, even if the contents of other elements are within the range of the present embodiment, coarse oxides will be formed and the toughness of the steel material will decrease. Accordingly, the content of Ca is to be 0.0010 to 0.0050%. A preferable lower limit of the content of Ca is 0.0012%, more preferably is 0.0015%, and further preferably is 0.0020%. A preferable upper limit of the content of Ca is 0.0045%, more preferably is 0.0040%, and further preferably is 0.0035%.

The balance of the chemical composition of the martensitic stainless steel pipe according to the present embodiment is Fe and impurities. Here, the term "impurities" refers to substances which, during industrial production of the martensitic stainless steel pipe, are mixed in from ore or scrap that is used as the raw material, or from the production environment or the like, and which are not intentionally contained but are allowed within a range that does not adversely influence the advantageous effects of the martensitic stainless steel pipe of the present embodiment.

[Optional elements]

The chemical composition of the martensitic stainless steel pipe according to the present embodiment may further contain one or more elements selected from the group consisting of Nb and W in lieu of a part of Fe. These elements are optional elements, and each of these elements increases the corrosion resistance of the steel material.

Nb: 0 to 0.15%

Niobium is an optional element, and does not have to be contained. That is, the content of Nb may be 0%. When contained, Nb forms fine precipitates (carbides, nitrides, and carbo-nitrides; hereunder, referred to as "Nb precipitates") and thereby refines the grains and increases the corrosion resistance of the steel material. If even a small amount of Nb is contained, the aforementioned advantageous effect will be obtained to a certain extent. However, if the content of Nb is more than 0.15%, even if the contents of other elements are within the range of the present embodiment, Nb precipitates will excessively form and the toughness of the steel material will decrease. Accordingly, the content of Nb is to be 0 to 0.15%. A preferable lower limit of the content of Nb is 0.01%, more preferably is 0.02%, and further preferably is 0.03%. A preferable upper limit of the content of Nb is 0.14%, more preferably is 0.13%, and further preferably is 0.10%.

W: 0 to 1.50%

Tungsten (W) is an optional element, and does not have to be contained. That is, the content of W may be 0%. When contained, W stabilizes a passive film and increases the corrosion resistance of the steel material. If even a small amount of W is contained, the aforementioned advantageous effect will be obtained to a certain extent. However, if the content of W is more than 1.50%, W will combine with C and form coarse carbides. In such case, the toughness of the steel material will decrease even if the contents of other elements are within the range of the present embodiment. Accordingly, the content of W is to be 0 to 1.50%. A preferable lower limit of the content of W is 0.01%, more preferably is 0.03%, and further preferably is 0.05%. A preferable upper limit of the content of W is 1.50%, and more preferably is 1.20%.

The chemical composition of the martensitic stainless steel pipe according to the present embodiment may further contain one or more elements selected from the group consisting of Sn, As, and Sb in lieu of a part of Fe. These elements are optional elements, and each of these elements increases the corrosion resistance of the steel material.

Sn: 0 to 0.0100%

Tin (Sn) is an optional element, and does not have to be contained. That is, the content of Sn may be 0%. When contained, Sn increases the corrosion resistance of the steel material. If even a small amount of Sn is contained, the aforementioned advantageous effect will be obtained to a certain extent. On the other hand, if the content of Sn is more than 0.0100%, even if the contents of other elements are within the range of the present embodiment, Sn will segregate to grain boundaries and, on the contrary, the corrosion resistance of the steel material will decrease. Accordingly, the content of Sn is to be 0 to 0.0100%. A preferable lower limit of the content of Sn is 0.0001%, more preferably is 0.0003%, and further preferably is 0.0005%. A preferable upper limit of the content of Sn is 0.0090%, more preferably is 0.0080%, and further preferably is 0.0060%.

As: 0 to 0.0100%

Arsenic (As) is an optional element, and does not have to be contained. That is, the content of As may be 0%. When contained, As increases the corrosion resistance of the steel material. If even a small amount of As is contained, the aforementioned advantageous effect will be obtained to a certain extent. On the other hand, if the content of As is more than 0.0100%, even if the contents of other elements are within the range of the present embodiment, As will segregate to grain boundaries and, on the contrary, the corrosion resistance of the steel material will decrease. Accordingly, the content of As is to be 0 to 0.0100%. A preferable lower limit of the content of As is 0.0001%, more preferably is 0.0003%, and further preferably is 0.0005%. A preferable upper limit of the content of As is 0.0090%, more preferably is 0.0080%, and further preferably is 0.0060%.

Sb: 0 to 0.0100%

Antimony (Sb) is an optional element, and does not have to be contained. That is, the content of Sb may be 0%. When contained, Sb increases the corrosion resistance of the steel material. If even a small amount of Sb is contained, the aforementioned advantageous effect will be obtained to a certain extent. On the other hand, if the content of Sb is more than 0.0100%, even if the contents of other elements are within the range of the present embodiment, Sb will segregate to grain boundaries and, on the contrary, the corrosion resistance of the steel material will decrease. Accordingly, the content of Sb is to be 0 to 0.0100%. A preferable lower limit of the content of Sb is 0.0001%, more preferably is 0.0003%, and further preferably is 0.0005%. A preferable upper limit of the content of Sb is 0.0090%, more preferably is 0.0080%, and further preferably is 0.0060%.

The chemical composition of the martensitic stainless steel pipe according to the present embodiment may further contain one or more elements selected from the group consisting of B, Mg, and rare earth metal (REM) in lieu of a part of Fe. These elements are optional elements, and each of these elements increases the hot workability of the steel material.

B: 0 to 0.0050%

Boron (B) is an optional element, and does not have to be contained. That is, the content of B may be 0%. When contained, B segregates to austenite grain boundaries and thereby strengthens the grain boundaries and increases the hot workability of the steel material. If even a small amount of B is contained, the aforementioned advantageous effect will be obtained to a certain extent. However, if the content of B is more than 0.0050%, even if the contents of other elements are within the range of the present embodiment, Cr carbo-borides will be formed and the toughness of the steel material will decrease. Accordingly, the content of B is to be 0 to 0.0050%. A preferable lower limit of the content of B is 0.0001%, and more preferably is 0.0002%. A preferable upper limit of the content of B is 0.0045%, more preferably is 0.0040%, further preferably is 0.0035%, and further preferably is 0.0030%.

Mg: 0 to 0.0050%

Magnesium (Mg) is an optional element, and does not have to be contained. That is, the content of Mg may be 0%. When contained, Mg controls the morphology of inclusions and increases the hot workability of the steel material. If even a small amount of Mg is contained, the aforementioned advantageous effect will be obtained to a certain extent. However, if the content of Mg is more than 0.0050%, even if the contents of other elements are within the range of the present embodiment, coarse oxides will be formed and the toughness of the steel material will decrease. Accordingly, the content of Mg is to be 0 to 0.0050%. A preferable lower limit of the content of Mg is 0.0001%, more preferably is 0.0005%, and further preferably is 0.0010%. A preferable upper limit of the content of Mg is 0.0045%, more preferably is 0.0040%, and further preferably is 0.0035%.

Rare earth metal (REM): 0 to 0.0100%

Rare earth metal (REM) is an optional element, and does not have to be contained. That is, the content of REM may be 0%. When contained, similarly to Mg, REM controls the morphology of inclusions and increases the hot workability of the steel material. If even a small amount of REM is contained, the aforementioned advantageous effect will be obtained to a certain extent. However, if the content of REM is more than 0.0100%, even if the contents of other elements are within the range of the present embodiment, coarse oxides will be formed and the toughness of the steel material will decrease. Accordingly, the content of REM is to be 0 to 0.0100%. A preferable lower limit of the content of REM is 0.0001%, more preferably is 0.0005%, and further preferably is 0.0010%. A preferable upper limit of the content of REM is 0.0080%, more preferably is 0.0060%, and further preferably is 0.0050%.

Note that, in the present description the term "REM" means one or more elements selected from the group consisting of scandium (Sc) which is the element with atomic number 21, yttrium (Y) which is the element with atomic number 39, and the elements from lanthanum (La) with atomic number 57 to lutetium (Lu) with atomic number 71 that are lanthanoids. Further, in the present description, the term "content of REM" refers to the total content of these elements.

[Microstructure]

The microstructure of the martensitic stainless steel pipe according to the present embodiment consists of, in volume percent, retained austenite in an amount of 0 to 15% and ferrite in an amount of 0 to 5%, with the balance being tempered martensite. In the present description, the phrase "consist of retained austenite, ferrite, and tempered martensite" means that the amount of any phase other than retained austenite, ferrite, and tempered martensite is negligibly small. For example, in the chemical composition of the martensitic stainless steel pipe according to the present embodiment, the volume ratios of precipitates and inclusions are negligibly small as compared with the volume ratios of retained austenite, ferrite, and tempered martensite. That is, the microstructure of the martensitic stainless steel pipe according to the present embodiment may contain minute amounts of precipitates, inclusions, and the like, in addition to retained austenite, ferrite, and tempered martensite.

As mentioned above, in the microstructure of the martensitic stainless steel pipe according to the present embodiment, the volume ratio of retained austenite is 0 to 15% and the volume ratio of ferrite is 0 to 5%, with the balance being tempered martensite. That is, in the microstructure of the martensitic stainless steel pipe according to the present embodiment, the volume ratio of tempered martensite is 80 to 100%. If the volume ratios of retained austenite and ferrite are too high, it will be difficult to control the mechanical properties of the steel material. On the other hand, a lower limit of the volume ratios of retained austenite and ferrite may be 0%. That is, the martensitic stainless steel pipe according to the present embodiment may have a microstructure consisting only of tempered martensite.

In the present embodiment, in the microstructure, the lower limit of the volume ratio of retained austenite may be 1%, or may be 2%. Further, in the microstructure, the upper limit of the volume ratio of retained austenite may be 13%, or may be 10%. In the present embodiment, in the microstructure, the lower limit of the volume ratio of ferrite may be 1%, or may be 2%. Further, in the microstructure, the upper limit of the volume ratio of ferrite may be 4%, or may be 3%.

[Method for measuring volume ratio of retained austenite]

The volume ratio (%) of retained austenite in the microstructure of the martensitic stainless steel pipe of the present embodiment can be determined by the method described hereunder.

The volume ratio of retained austenite is obtained by an X-ray diffraction method. Specifically, a test specimen is prepared from a central portion of the wall thickness of the martensitic stainless steel pipe. Although not particularly limited, the size of the test specimen is, for example, 15 mm × 15 mm × a thickness of 2 mm. In this case, the thickness direction of the test specimen is parallel to the wall thickness (pipe diameter) direction. Using the prepared test specimen, the X-ray diffraction intensity of each of the (200) plane of $\alpha$ phase (ferrite and martensite), the (211) plane of $\alpha$ phase, the (200) plane of $\gamma$ phase (retained austenite), the (220) plane of $\gamma$ phase, and the (311) plane of $\gamma$ phase is measured to calculate an integrated intensity of each plane.

In the measurement of the X-ray diffraction intensity, the target of the X-ray diffraction apparatus is Mo (Mo K$\alpha$ ray). After calculation, the volume ratio V$\gamma$ (%) of retained austenite is calculated using Formula (I) for combinations (2 × 3 = 6 pairs) of each plane of the $\alpha$ phase and each plane of the $\gamma$ phase. Then, an average value of the volume ratios V$\gamma$ of retained austenite of the six pairs is defined as the volume ratio (%) of retained austenite.

$$V\gamma = 100/\{1 + (I\alpha \times R\gamma)/(I\gamma \times R\alpha)\} \qquad (I)$$

Where, I$\alpha$ represents the integrated intensity of $\alpha$ phase. R$\alpha$ represents the crystallographic theoretical calculation value of $\alpha$ phase. I$\gamma$ represents the integrated intensity of $\gamma$ phase. R$\gamma$ represents the crystallographic theoretical calculation value of $\gamma$ phase. Note that, in the present description, R$\alpha$ in the (200) plane of $\alpha$ phase is 15.9, R$\alpha$ in the (211) plane of $\alpha$ phase is 29.2, R$\gamma$ in the (200) plane of $\gamma$ phase is 35.5, R$\gamma$ in the (220) plane of $\gamma$ phase is 20.8, and R$\gamma$ in the (311) plane of $\gamma$ phase is 21.8. Note that the volume ratio of retained austenite is obtained by rounding off decimals of an obtained numerical value.

[Method for measuring volume ratio of ferrite]

The volume ratio (%) of ferrite in the microstructure of the martensitic stainless steel pipe of the present embodiment can be determined by the method described hereunder.

The volume ratio of ferrite is determined by a point counting method in accordance with JIS G 0555 (2015). Specifically, a test specimen is prepared from a central portion of the wall thickness of the martensitic stainless steel pipe. The test specimen is not particularly limited as long as the test specimen has an observation surface that is perpendicular to the rolling (pipe axis) direction. The test specimen is embedded in resin, and the observation surface polished to obtain a mirror surface is immersed in Vilella's reagent (a mixed solution of ethanol, hydrochloric acid, and picric acid) for about 60 seconds, and then etched to reveal the microstructure. 30 visual fields in the etched observation surface are observed using an optical microscope. Although not particularly limited, the visual field area is, for example, 0.03 mm$^2$ (magnification of 400×).

Those skilled in the art are able to distinguish ferrite from the other phases (retained austenite and tempered martensite) based on contrast in each observation visual field. Therefore, ferrite in each observation visual field is identified based on contrast. The area fraction of the identified ferrite is determined by a point counting method in accordance with JIS G 0555 (2015). The arithmetic average value of the area fractions of ferrite determined in the 30 visual fields is defined as the volume ratio (%) of ferrite. Note that, the volume ratio of ferrite is obtained by rounding off decimals of an obtained numerical value.

[Method for measuring volume ratio of tempered martensite]

The volume ratio (%) of tempered martensite can be determined by the following method. Specifically, using the volume ratio (%) of retained austenite obtained by the aforementioned X-ray diffraction method, and the volume ratio (%) of ferrite obtained by the aforementioned point counting method, the volume ratio (%) of tempered martensite in the microstructure of the martensitic stainless steel pipe is determined by the following formula.

Volume ratio (%) of tempered martensite = 100 - {volume ratio (%) of retained austenite + volume ratio (%) of ferrite}

[Yield strength]

The martensitic stainless steel pipe according to the present embodiment has a yield strength of 758 MPa or more (110 ksi or more). As used herein, the term "yield strength" means 0.2% offset yield stress obtained in a tensile test. Even though the martensitic stainless steel pipe according to the present embodiment has a yield strength of 110 ksi or more, by having the chemical composition and microstructure described above and having Ca sulfides which are described later, the martensitic stainless steel pipe has excellent machinability. In the martensitic stainless steel pipe according to the present embodiment, although not particularly limited, an upper limit of the yield strength is, for example, 1068 MPa.

The yield strength of the martensitic stainless steel pipe according to the present embodiment can be determined by the following method. A tensile test specimen is prepared from the martensitic stainless steel pipe according to the present embodiment in accordance with ASTM E8/E8M (2021). Specifically, a round bar specimen is prepared from a center portion of the wall thickness of the steel pipe. The size of the round bar test specimen is, for example, as follows: the parallel portion diameter is 8.9 mm and the gage length is 35.6 mm. In a case where a round bar specimen cannot be prepared from the steel pipe, an arc-shaped test specimen is to be prepared. The size of the arc-shaped test specimen is, for example, as follows: the thickness is the full wall thickness, the width is 25.4 mm, and the gage length is 50.8 mm. Note that, the axial direction of the tensile test specimen is parallel to the rolling (pipe axis) direction of the steel pipe. A tensile test is carried out at normal temperature ($24\pm3°C$) in accordance with ASTM E8/E8M (2021) using the tensile test specimen, and the obtained 0.2% offset yield stress (MPa) is defined as the yield strength (MPa). In the present embodiment, a value obtained by rounding off decimals of the obtained numerical value is adopted as the yield strength (MPa).

[Ca sulfides]

In the martensitic stainless steel pipe according to the present embodiment, the number density of Ca sulfides having an equivalent circular diameter of 1.0 $\mu$m or more is 3 /mm$^2$ or more. In the present description, the term "Ca sulfides" is defined as, among particles in the martensitic stainless steel pipe, those particles in which, when the mass percent of the particle is taken as 100%, in mass%, the content of Ca is 20% by mass or more and the content of S is 10% by mass or more. In the present description, in addition, Ca sulfides having an equivalent circular diameter of 1.0 $\mu$m or more are also referred to as "coarse Ca sulfides".

As mentioned above, in a martensitic stainless steel pipe whose strength has been raised, the machinability is liable to decrease. Therefore, in a martensitic stainless steel pipe which has the chemical composition described above and the microstructure described above, and in which the yield strength has been raised to 110 ksi or more, the machinability is liable to decrease and tool wear during cutting work is liable to increase. Therefore, the martensitic stainless steel pipe according to the present embodiment contains coarse Ca sulfides in an amount equivalent to a number density of 3 /mm$^2$ or more. As a result, the martensitic stainless steel pipe according to the present embodiment has excellent machinability while maintaining a yield strength of 110 ksi or more.

In the martensitic stainless steel pipe according to the present embodiment, a preferable lower limit of the number density of coarse Ca sulfides is 4 /mm$^2$, more preferably is 5 /mm$^2$, and further preferably is 6 /mm$^2$. In the martensitic stainless steel pipe according to the present embodiment, although not particularly limited, the upper limit of the number density of coarse Ca sulfides is, for example, 25 /mm$^2$.

The number density of Ca sulfides having an equivalent circular diameter of 1.0 $\mu$m or more in the martensitic stainless steel pipe according to the present embodiment can be determined by the following method. Specifically, a test specimen is prepared from a central portion of the wall thickness of the martensitic stainless steel pipe. The prepared test specimen is embedded in resin in a manner so that a face of the test specimen which includes the rolling (pipe axis) direction and wall thickness (pipe diameter) direction is an observation surface. The observation surface of the test specimen embedded in resin is then polished. An arbitrary 10 visual fields on the observation surface after polishing are observed. The area of each visual field is set to, for example, 75 mm$^2$ (15 mm $\times$ 5 mm).

In each visual field, the number of Ca sulfides having an equivalent circular diameter of 1.0 $\mu$m or more is determined. Specifically, first, particles in each visual field are identified based on contrast. Each identified particle is subjected to an element concentration analysis (EDS analysis). In the EDS analysis, the accelerating voltage is set to 20 kV, and element concentrations are determined for N, O, Mg, Al, Si, P, S, Ca, Ti, Cr, Mn, Fe, Cu, and Nb as elements to be analyzed. Based on the EDS analysis result for each particle, those particles in which, in mass%, the content of Ca is 20% or more and the content of S is 10% or more are identified as "Ca sulfides".

The total number of Ca sulfides having an equivalent circular diameter of 1.0 $\mu$m or more (coarse Ca sulfides) among the Ca sulfides identified in the 10 visual fields is determined. The number density (/mm$^2$) of Ca sulfides having an equivalent circular diameter of 1.0 $\mu$m or more is then determined based on the total number of Ca sulfides having an equivalent circular diameter of 1.0 $\mu$m or more and the total area of the 10 visual fields. In the present embodiment, when determining the number density (/mm$^2$) of Ca sulfides having an equivalent circular diameter of 1.0 $\mu$m or more, the decimals of the obtained numerical value are rounded off. Note that, measurement of the number density of Ca sulfides having an equivalent circular diameter of 1.0 $\mu$m or more can be performed using an apparatus in which a scanning electron microscope is provided with a composition analysis function (SEM-EDS apparatus). For example, automated inclusion analysis equipment having the trade name "Metals Quality Analyzer" manufactured by FEI Company (ASPEX Corporation) can be used as the SEM-EDS apparatus.

[Cu precipitates]

Preferably, in the microstructure of the martensitic stainless steel pipe according to the present embodiment, an area fraction of Cu precipitates with an area of 0.20 $\mu$m$^2$ or more is more than 0.10 to 0.50%. In the present description, the term "Cu precipitate" means a precipitate composed of Cu and impurities. Further, in the present embodiment, in elemental analysis performed using a field emissionelectron probe micro-analyzer (FE-EPMA), element concentrations are determined for Fe, Cr, Ni, Cu, Mn, Mo, and Si as elements to be analyzed. A region where a Cu concentration of 6.00% by mass or more is detected by the elemental analysis by the FE-EPMA is determined as a region where a Cu precipitate is present. That is, in the present embodiment, the phrase "an area fraction of Cu precipitates with an area of 0.20 $\mu$m$^2$ or more is more than 0.10 to 0.50%" means that, in elemental analysis performed by an FE-EPMA, when the total of the concentrations of Fe, Cr, Ni, Cu, Mn, Mo, and Si is taken as 100% by mass, an area fraction of regions in which a Cu concentration of 6.00% by mass or more is detected and which each continuously occupies an area of 0.20 $\mu$m$^2$ or more is more than 0.10 to 0.50%.

In the present description, a Cu precipitate with an area of 0.20 $\mu$m$^2$ or more is also referred to as a "coarse Cu precipitate". As mentioned above, the martensitic stainless steel pipe according to the present embodiment contains coarse Ca sulfides in an amount equivalent to a number density of 3 /mm$^2$ or more, which increases the machinability of the steel pipe. If the martensitic stainless steel pipe according to the present embodiment also contains coarse Cu precipitates, tool wear during cutting work is further suppressed. Specifically, if the area fraction of coarse Cu precipitates is more than 0.10%, the martensitic stainless steel pipe according to the present embodiment will have further excellent machinability. On the other hand, if the area fraction of coarse Cu precipitates is more than 0.50%, the toughness of the steel pipe will markedly decrease.

Therefore, preferably the martensitic stainless steel pipe according to the present embodiment has the chemical composition described above and the microstructure described above, and contains coarse Ca sulfides in an amount equivalent to a number density of 3 /mm$^2$ or more, and furthermore, the area fraction of coarse Cu precipitates is made more than 0.10 to 0.50%. In such case, the steel pipe has further excellent machinability while maintaining a yield strength of 110 ksi or more. In the martensitic stainless steel pipe according to the present embodiment, a more preferable lower limit of the area fraction of coarse Cu precipitates is 0.11%, and further preferably is 0.15%. In the martensitic stainless steel pipe according to the present embodiment, a more preferable upper limit of the area fraction of coarse Cu precipitates is 0.48%, and further preferably is 0.45%.

The area fraction of Cu precipitates with an area of 0.20 $\mu$m$^2$ or more in the martensitic stainless steel pipe according to the present embodiment can be determined by the following method. A test specimen for observation of coarse Cu precipitates is prepared from the martensitic stainless steel pipe according to the present embodiment. Specifically, a test specimen having an observation surface with dimensions of 5 mm in the pipe axis direction and 5 mm in the pipe diameter direction is prepared from the central portion of the wall thickness. Note that, the size of the test specimen is not particularly limited as long as the aforementioned observation surface can be obtained.

An arbitrary four visual fields of 60 $\mu$m $\times$ 60 $\mu$m are identified on the obtained observation surface. Each of the identified visual fields is divided into regions of 500 $\times$ 500 pixels at a pitch of 0.12 $\mu$m. The area of each pixel is 0.0144 $\mu$m$^2$. Each pixel is subjected to elemental analysis using an FE-EPMA. In the elemental analysis using the FE-EPMA, the accelerating voltage is set to 15 kV. Note that, Fe, Cr, Ni, Cu, Mn, Mo, and Si are set as the elements to be analyzed.

Here, with regard to the FE-EPMA, due to the characteristics of the apparatus, elemental analysis is performed with respect to a range that has a certain volume. That is, even when precipitates are present at the observation surface, elemental analysis of only the precipitates cannot be performed, and the base metal is also simultaneously subjected to elemental analysis. Accordingly, when elemental analysis by an FE-EPMA is performed in a region in which Cu precipitates are present at the observation surface, elements (Fe and the like) derived from the base metal are also detected in addition to Cu.

On the other hand, in the present embodiment, as mentioned above, the content of Cu in the base metal is 1.00 to 3.50%. Therefore, in the elemental analysis by the FE-EPMA, at pixels where the Cu concentration is 6.00% by mass or more, at least concentration of Cu has occurred. Therefore, in the present embodiment, it is determined that Cu precipitates are present at pixels where the Cu concentration obtained by the elemental analysis by the FE-EPMA is 6.00% by mass or more.

Specifically, a pixel where the Cu concentration is 6.00% by mass or more based on the results of the elemental analysis obtained by the FE-EPMA is also referred to as a "specific pixel". Here, in a case where a plurality of specific pixels are consecutively adjacent, it is determined that one individual Cu precipitate is present in the region occupied by the relevant plurality of specific pixels (hereinafter, also referred to as a "specific region"). Specifically, first, attention is focused on one specific pixel, which is defined as a "first specific pixel". Next, a specific pixel adjacent to the first specific pixel is defined as a "second specific pixel". Next, a specific pixel which is adjacent to the second specific pixel and which is other than the first specific pixel is defined as a "third specific pixel". Next, a specific pixel which is adjacent to the third specific pixel and which is other than the first specific pixel and the second specific pixel is defined as a "fourth specific pixel". In this way, adjacent specific pixels are continuously determined. When there is no specific pixel corresponding to an n-th specific pixel (n is a natural number), the region occupied by the first specific pixel to an n-1th specific pixel is determined as a specific region.

As mentioned above, in a region (specific region) occupied by consecutively adjacent specific pixels identified in this manner, one individual Cu precipitate exists. That is, in a case where a specific region includes 14 pixels ($0.20 \mu m^2$) or more, one individual Cu precipitate with an area of $0.20 \mu m^2$ or more exists in the specific region. Therefore, in the present description, in a case where 14 pixels ($0.20 \mu m^2$) or more are included as a specific region, it is determined that a "coarse Cu precipitate" exists. The areas in which it is determined that coarse Cu precipitates exist are determined for the respective visual fields. The area fraction (%) of coarse Cu precipitates can be determined based on the total of the areas of the coarse Cu precipitates determined in the four visual fields and the total area of the four visual fields. In the present embodiment, a value obtained by rounding off to the second decimal places of the obtained numerical value is adopted as the area (%) of coarse Cu precipitates.

[Machinability]

The martensitic stainless steel pipe according to the present embodiment has the chemical composition described above and the microstructure described above, and the number density of coarse Ca sulfides in the martensitic stainless steel pipe is 3 /mm² or more. As a result, even though the yield strength is 110 ksi or more, the martensitic stainless steel pipe according to the present embodiment has excellent machinability. In the present embodiment, whether the martensitic stainless steel pipe "has excellent machinability" can be evaluated by the following method.

The martensitic stainless steel pipe according to the present embodiment is subjected to outer circumferential lathe turning to evaluate the service life thereof. Specifically, a hard metal equivalent to P10 defined in JIS B 4053 (2013) is used as the cutting tool. The cutting speed is set to 100 m/min, the feed rate is set to 0.15 mm/rev, the cut depth is set to 0.75 mm, and the outer circumferential lathe turning is performed without using a lubricant.

Of the entire surface of the steel pipe, a face subjected to outer circumferential lathe turning is also referred to as the finished surface of the steel pipe. In the present embodiment, focusing on the fact that the quality of the finished surface of the steel pipe decreases when the tool reaches the end of its service life, the service life is evaluated using the quality of the finished surface of the steel pipe as an index. Specifically, outer circumferential lathe turning is performed while checking the finished surface of the steel pipe by visual observation. A maximum height Rz is measured with respect to a region where a decrease in the quality of the finished surface of the steel pipe was confirmed as the result of checking the quality by visual observation. Specifically, the maximum height Rz is measured using a surface roughness tester in accordance with JIS B 0601 (2013). When measuring the maximum height Rz, the sampling length is set to 2.5 mm and the evaluation length is set to 12.5 mm.

If the obtained maximum height Rz is more than $30 \mu m$, the outer circumferential lathe turning is ended. If the obtained maximum height Rz is $30 \mu m$ or less, performance of the outer circumferential lathe turning is continued. In the present embodiment, the distance for which the outer circumferential lathe turning is performed from the time that the outer circumferential lathe turning is started using a new tool until the maximum height Rz of the finished surface of the steel pipe becomes more than $30 \mu m$ is defined as the service life.

Note that, when outer circumferential lathe turning is performed, flaws caused by inclusions typified by Ca sulfides may sometimes be formed on the finished surface of the steel pipe. A person skilled in the art can identify by visual observation that flaws formed on the finished surface of a steel pipe were caused by inclusions. In the present embodiment, flaws caused by inclusions are ignored in the evaluation of the quality of the finished surface of the steel pipe. That is, in the case of measuring the maximum height Rz also, the maximum height Rz is measured in a region in which flaws caused by inclusions are not formed.

In addition, the service life of a steel pipe equivalent to API 5CT P110, specifically, a steel pipe containing C:

0.20 to 0.30%, Si: 1.0% or less, Mn: 2.0% or less, P: 0.03% or less, S: 0.03% or less, Cr: 1.5% or less, and Mo: 1.0% or less, that is the service life obtained when the steel pipe is subjected to similar outer circumferential lathe turning is taken as 1.0, and a relative value of the service life with respect thereto is determined. For the martensitic stainless steel pipe according to the present embodiment, if the service life (relative value) determined by the above method is 0.3 or more, the martensitic stainless steel pipe is evaluated as having excellent machinability.

Preferably, the martensitic stainless steel pipe according to the present embodiment has the chemical composition described above and the microstructure described above, and the number density of coarse Ca sulfides in the martensitic stainless steel pipe is 5 /mm$^2$ or more. In this case, even though the yield strength is 110 ksi or more, the martensitic stainless steel pipe has further excellent machinability. Here, in the present embodiment, if the service life (relative value) determined by the above method is 0.5 or more, the martensitic stainless steel pipe is evaluated as having further excellent machinability.

Preferably, the martensitic stainless steel pipe according to the present embodiment has the chemical composition described above and the microstructure described above, the number density of coarse Ca sulfides in the martensitic stainless steel pipe is 3 /mm$^2$ or more, and furthermore the area fraction of coarse Cu precipitates is more than 0.10 to 0.50%. In this case, even though the yield strength is 110 ksi or more, the martensitic stainless steel pipe has further excellent machinability. Here, in the present embodiment, if the service life (relative value) determined by the above method is 0.5 or more, the martensitic stainless steel pipe is evaluated as having further excellent machinability.

Preferably, the martensitic stainless steel pipe according to the present embodiment has the chemical composition described above and the microstructure described above, the number density of coarse Ca sulfides is 5 /mm$^2$ or more, and furthermore the area fraction of coarse Cu precipitates is more than 0.10 to 0.50%. In this case, even though the yield strength is 110 ksi or more, the martensitic stainless steel pipe has extremely excellent machinability. Here, in the present embodiment, if the service life (relative value) determined by the above method is 0.7 or more, the martensitic stainless steel pipe is evaluated as having extremely excellent machinability.

[Toughness]

Preferably, the martensitic stainless steel pipe according to the present embodiment has the chemical composition described above and the microstructure described above, the number density of coarse Ca sulfides is 3 /mm$^2$ or more, and furthermore the area fraction of coarse Cu precipitates is more than 0.10 to 0.50%. In this case, even though the yield strength is 110 ksi or more, the martensitic stainless steel pipe has excellent toughness. In the present embodiment, whether the martensitic stainless steel pipe "has excellent toughness" can be evaluated by the following method.

The toughness of the martensitic stainless steel pipe according to the present embodiment is evaluated by a Charpy impact test in accordance with ASTM E23 (2018). A V-notch test specimen is prepared from the steel pipe according to the present embodiment. Specifically, a full-size or sub-size V-notch test specimen is prepared in accordance with API 5CRA (2010). A Charpy impact test in accordance with ASTM E23 (2018) is carried out on the prepared V-notch test specimen to determine the absorbed energy (J) at -10°C. Note that, in a case where a sub-size V-notch test specimen is used, the absorbed energy that is obtained is divided by a reduction factor described in API 5CRA (2010) to convert the obtained absorbed energy to the absorbed energy for a full-size V-notch test specimen. Further, a value obtained by rounding off decimals of the obtained numerical value is adopted as the absorbed energy (J) at -10°C. In the present embodiment, if the absorbed energy at -10°C is 40 J or more, the martensitic stainless steel pipe is evaluated as having excellent toughness.

[Shape and uses]

The martensitic stainless steel pipe according to the present embodiment may be a seamless steel pipe or may be a welded steel pipe. The steel pipe is, for example, a steel pipe for oil country tubular goods. The term "steel pipe for oil country tubular goods" means a steel pipe that is to be used for oil country tubular goods. Oil country tubular goods are, for example, casing pipes, tubing pipes, and drilling pipes which are used for drilling an oil well or a gas well, extracting crude oil or natural gas, and the like. Preferably, the martensitic stainless steel pipe according to the present embodiment is a seamless steel pipe for oil country tubular goods.

As described above, in the martensitic stainless steel pipe according to the present embodiment, each element in the chemical composition is within the range of the present embodiment, and the martensitic stainless steel pipe has a microstructure consisting of, in volume percent, retained austenite in an amount of 0 to 15% and ferrite in an amount of 0 to 5%, with the balance being tempered martensite, and a number density of Ca sulfides having an equivalent circular diameter of 1.0 μm or more is 3 /mm$^2$ or more. As a result, the martensitic stainless steel pipe according to the present embodiment has a yield strength of 110 ksi or more and has excellent machinability.

[Production method]

A method for producing a seamless steel pipe as one example of a method for producing the martensitic stainless steel pipe according to the present embodiment will now be described. Note that, the production method described hereunder is an example, and a method for producing the martensitic stainless steel pipe according to the present embodiment is not limited to the production method described hereunder. That is, as long as a martensitic stainless steel pipe according to the present embodiment composed as described above can be produced, a method for producing the martensitic stainless steel pipe is not limited to the production method described hereunder. However, the production method described hereunder is a favorable method for producing the martensitic stainless steel pipe according to the present embodiment.

One example of a method for producing the martensitic stainless steel pipe according to the present embodiment includes a process of preparing a starting material (steelmaking process), a process of subjecting the starting material to hot working to produce a hollow shell (hot working process), and a process of subjecting the hollow shell to quenching and tempering (heat treatment process). Each of these processes is described in detail hereunder.

[Steelmaking process]

The steelmaking process includes a process of producing a molten steel (refining process), and a process of producing a starting material by a casting process using the molten steel (starting material production process).

[Refining process]

In the refining process, first, a molten steel containing Cr is placed in a ladle, and the molten steel in the ladle is subjected to a decarburization treatment under atmospheric pressure (rough decarburization refining process). Slag is generated by the decarburization treatment in the rough decarburization refining process. The slag generated by the decarburization treatment floats on the liquid surface of the molten steel after the rough decarburization refining process. In the rough decarburization refining process, Cr in the molten steel is oxidized to form $Cr_2O_3$. The $Cr_2O_3$ is absorbed into the slag. Therefore, a deoxidizer is added to the ladle to reduce $Cr_2O_3$ in the slag and recover Cr in the molten steel (Cr reduction treatment process). The rough decarburization refining process and the Cr reduction treatment process are carried out, for example, by an electric furnace process, a converter process, or an AOD (Argon Oxygen Decarburization) process. After the Cr reduction treatment process, the slag is removed from the molten steel (slag removal treatment process).

In the case of a Cr-containing steel, because C activity is reduced by Cr, a decarburization reaction is suppressed. Therefore, the molten steel after the slag removal treatment process is further subjected to a finishing decarburization treatment (finishing decarburization refining process). In the finishing decarburization refining process, a decarburization treatment is performed under reduced pressure. If the decarburization treatment is performed under reduced pressure, the CO gas partial pressure (Pco) in the atmosphere is lowered, and oxidation of Cr in the molten steel is suppressed. Therefore, if the decarburization treatment is performed under reduced pressure, the C concentration in the molten steel can be further lowered while suppressing oxidation of Cr. After the finishing decarburization refining process, a deoxidizer is added to the molten steel, and the Cr reduction treatment for reducing $Cr_2O_3$ in the slag is performed again (Cr reduction treatment process). The finishing decarburization refining process and the Cr reduction treatment process after the finishing decarburization refining process may be performed, for example, by the VOD (Vacuum Oxygen Decarburization) process or may be performed by the RH (Ruhrstahl-Heraeus) process.

After the Cr reduction treatment process, final compositional adjustment for the molten steel in the ladle, and temperature adjustment of the molten steel before the starting material production process are performed (compositional adjustment process). The compositional adjustment process is performed, for example, by LT (Ladle Treatment). Ca is added to the molten steel in the latter half of the compositional adjustment process. Here, the time period from when Ca is added to the molten steel until the Ca is uniformly dispersed in the molten steel is defined as a "uniform mixing time" $\tau$. The uniform mixing time $\tau$ can be determined by the following Formula (A).

$$\tau = 800 \times \varepsilon^{-0.4}...(A)$$

Where, $\varepsilon$ represents the stirring power density of the molten steel in the LT, and is defined by Formula (B).

$$\varepsilon = 28.5(Q/W) \times T \times \log(1+H/1.48)...(B)$$

Where, Q represents the flow rate of top-blown gas ($Nm^3$/min), W represents the molten steel mass (t), T represents the molten steel temperature (K), and H represents the depth of molten steel in the ladle (molten steel depth) (m).

In the compositional adjustment process, the molten steel temperature in the ladle is held at 1500 to 1700°C. Further, a holding time from the time that the uniform mixing time elapses after the Ca is added to the molten steel is defined as "holding time t" (sec). In this case, in the present embodiment, the holding time t after elapse of the uniform mixing time is set to less than 60 seconds.

If the holding time t is 60 seconds or more, the Ca added to the molten steel will modify inclusions in the molten steel and it will not be possible to cause largesized Ca sulfides to remain in the steel material. Consequently, in the produced martensitic stainless steel pipe, the number density of Ca sulfides having an equivalent circular diameter of 1.0 $\mu$m or more (coarse Ca sulfides) will be less than 3 /$mm^2$. As a result, the machinability of the steel pipe will decrease. On the other hand, if the holding time t is less than 60 seconds, the Ca added to the molten steel will form sulfides, and will remain as coarse Ca sulfides in the martensitic stainless steel pipe. Consequently, the number density of coarse Ca sulfides can be made 3 /$mm^2$ or more. As a result, the machinability of the steel pipe will increase.

As described above, in the compositional adjustment process of the present embodiment, preferably the holding time t from the time that the uniform mixing time elapses is set to less than 60 seconds. Further preferably, in the compositional adjustment process of the present embodiment, the holding time t from the time that the uniform mixing time elapses is set to 30 seconds or less. In this case, the number density of coarse Ca sulfides can be increased to 5 /$mm^2$ or more. As a result, further excellent machinability is obtained in the produced martensitic stainless steel pipe. Note that, in the compositional adjustment process of the present embodiment, although not particularly limited, a lower limit of the holding time t from the time that the uniform mixing time elapses is, for example, 10 seconds.

[Starting material production process]

A starting material (cast piece or ingot) is produced using the molten steel produced in the refining process described above. Specifically, a cast piece is produced by a continuous casting process using the molten steel. The cast piece may be a slab, may be a bloom, or may be a billet. Alternatively, an ingot may be produced by an ingot-making process using the molten steel. The cast piece or ingot may be further subjected to blooming or the like to produce a billet. A starting material is produced by the above-described process.

[Hot working process]

In the hot working process, the starting material is subjected to hot working to produce a hollow shell. As mentioned above, in the present embodiment, a method for producing a seamless steel pipe is described as one example of the production method. First, the starting material is heated in a reheating furnace. Although not particularly limited, the heating temperature is, for example, 1100 to 1300°C. After the billet is extracted from the reheating furnace, the billet is subjected to hot working to produce a hollow shell (seamless steel pipe). The method of hot working is not particularly limited, and it suffices to use a well-known method. For example, the Mannesmann process may be performed as hot working to produce a hollow shell. In this case, a round billet is subjected to piercing-rolling using a piercing machine. When performing piercing-rolling, although not particularly limited, the piercing ratio is, for example, 1.0 to 4.0. The round billet subjected to piercing-rolling is further subjected to hot rolling with a mandrel mill, a reducer, a sizing mill, or the like to produce a hollow shell. The cumulative reduction of area in the hot working process is, for example, 20 to 70%.

A hollow shell may be produced from the billet by a different hot working method. For example, in a case where the steel material is a heavy-wall steel material of a short length such as a coupling, a hollow shell may be produced by forging by the Ehrhardt process or the like. A hollow shell is produced by the above process.

The hollow shell produced by hot working may be air-cooled (as-rolled). The hollow shell produced by hot working may be subjected to direct quenching after hot working without being cooled to normal temperature, or may be subjected to quenching after supplementary heating (reheating) after hot working. In a case where direct quenching is performed after hot working, or where quenching is performed after the hollow shell is subjected to supplementary heating after hot working, for the purpose of relieving residual stress, stress relief annealing (SR treatment) may be performed before the heat treatment process (quenching and tempering) of the next process.

[Heat treatment process]

In the heat treatment process, the hollow shell is subjected to a heat treatment. Specifically, the heat treatment process includes a quenching process and a tempering process.

[Quenching process]

In the heat treatment process, first, the hollow shell produced in the hot working process is subjected to quenching (quenching process). The quenching is carried out by a well-known method. Specifically, for example, the hollow shell after the hot working process is loaded into a heat treatment furnace and held at a quenching temperature. The quenching temperature is equal to or higher than the Ac₃ transformation point, and for example is 900 to 1000°C. After being held at the quenching temperature, the hollow shell is rapidly cooled (quenched). Although not particularly limited, the holding time at the quenching temperature is, for example, 10 to 60 minutes. The quenching method is, for example, water cooling. The quenching method is not particularly limited. For example, the hollow shell may be rapidly cooled by immersing the hollow shell in a water bath or an oil bath. The hollow shell may be rapidly cooled by pouring or jetting cooling water onto the outer surface and/or inner surface of the hollow shell by shower cooling or mist cooling.
Note that, as mentioned above, quenching (direct quenching) may be performed immediately after hot working, without cooling the hollow shell to normal temperature after the hot working process. Quenching may be performed after the hollow shell has been held at the quenching temperature after being loaded into a supplementary heating furnace before the temperature of the hollow shell decreased after the hot working.

[Tempering process]

The hollow shell after quenching may also be subjected to tempering (tempering process). In the tempering process, the tempering temperature and tempering time are adjusted according to the chemical composition of the steel material and the yield strength to be obtained. In the tempering process of the present embodiment, the tempering temperature is, for example, 500 to 650°C. In the tempering process of the present embodiment, the tempering time is, for example, 30 to 180 minutes. Note that, in the present description, the term "tempering temperature" means the temperature of the heat treatment furnace for performing the tempering. Further, in the present description, the term "tempering time" means the time for which the hollow shell is held at the tempering temperature.
In the tempering process of the present embodiment, in addition, preferably coarse Cu precipitates are caused to precipitate in the hollow shell by adjusting the tempering temperature and tempering time. Specifically, among hollow shells having the chemical composition described above, when performing tempering with respect to a hollow shell in which the content of Cu is 1.50 to 3.50%, it is preferable to adjust the Larson-Miller parameter LMP (= (tempering temperature (°C) + 273) × (log(tempering time (mins)/60)+20)) for the tempering to within a range of 17000 to 17800.
In the tempering process of the present embodiment, if the Larson-Miller parameter LMP for the tempering is less than 17000, in some cases the area fraction of coarse Cu precipitates will be 0.10% or less. On the other hand, if the Larson-Miller parameter LMP for the tempering is more than 17800, in some cases a yield strength of 110 ksi or more will not be obtained. In such case, in addition, the area fraction of coarse Cu precipitates may become more than 0.50%.
Therefore, in the tempering process of the present embodiment, preferably, the Larson-Miller parameter LMP for the tempering with respect to a hollow shell in which the content of Cu is 1.50 to 3.50% is adjusted to within a range of 17000 to 17800. In this case, coarse Cu precipitates can be caused to precipitate appropriately during tempering. As a result, in the microstructure of the produced martensitic stainless steel pipe, the area fraction of coarse Cu precipitates can be made more than 0.10 to 0.50%. In this case, the steel pipe has further excellent machinability.
In the tempering process of the present embodiment, in addition, preferably the area fraction of coarse Cu precipitates in the hollow shell is adjusted by adjusting the cooling rate after performing tempering. Specifically, with respect to hollow shells having the chemical composition described above, if a hollow shell has a Cu content of 1.50 to 3.50%, preferably the cooling rate after tempering is set to 15°C/min or more. Here, the phrase "cooling rate after tempering" means the cooling rate until the temperature of the hollow shell cools from the tempering temperature to 300°C. Note that, preferably the hollow shell is cooled until the temperature of the hollow shell becomes 300°C or less. In the tempering process of the present embodiment, if the cooling rate after tempering is less than 15°C/min, in some cases the area fraction of coarse Cu precipitates will be more than 0.50%.
Therefore, in the tempering process of the present embodiment, preferably the cooling rate after tempering is made 15°C/min or more. In such case, too much precipitation of coarse Cu precipitates during cooling after tempering can be suppressed. As a result, in the microstructure of the produced martensitic stainless steel pipe, the area fraction of coarse Cu precipitates can be made more than 0.10 to 0.50%. In such case, in addition to having excellent machinability, the steel pipe will also have excellent toughness. Note that, the upper limit of the cooling rate is not particularly limited.
The martensitic stainless steel pipe according to the present embodiment can be produced by the process described above. Note that, as mentioned above, a method for producing the martensitic stainless steel pipe according to the present embodiment is not limited to the production method described above. Specifically, as long as a martensitic stainless steel pipe can be produced in which the content of each element in the chemical composition is within the range of the present embodiment and which has a microstructure consisting of, in volume percent, retained austenite in an amount of 0 to 15% and ferrite in an amount of 0 to 5%, with the balance being tempered martensite, and which has a yield strength of 110 ksi or more, and in addition, in which the number density of Ca sulfides having an equivalent circular diameter of 1.0 $\mu$m or more is 3 /mm$^2$ or more, a method for producing the martensitic stainless steel pipe of the present embodiment is not limited to the production method described above. Hereunder, the martensitic stainless steel pipe according to the present embodiment is described more specifically by way of examples.

EXAMPLES

Molten steels having the chemical compositions shown in Table 1 and Table 2 were produced. Note that, the symbol "-" in Table 1 and Table 2 means that a content of a corresponding element was 0% when the fractions of numerical values described in Table 1 and Table 2 were rounded off. For example, it means that the content of Nb of Test No. 1 was 0% as a result of rounding off to the second decimal places. It means that the content of W of Test No. 1 was 0% as a result of rounding off to the second decimal places. It means that the content of Sn of Test No. 1 was 0% as a result of rounding off to the fourth decimal places. It means that the content of As of Test No. 1 was 0% as a result of rounding off to the fourth decimal places. It means that the content of Sb of Test No. 1 was 0% as a result of rounding off to the fourth decimal places. It means that the content of B of Test No. 1 was 0% as a result of rounding off to the fourth decimal places. It means that the content of Mg of Test No. 1 was 0% as a result of rounding off to the fourth decimal places. It means that the content of REM of Test No. 1 was 0% as a result of rounding off to the fourth decimal places.

[Table 1]

Table 1

| Test Number | Chemical Composition (unit is mass%; balance is Fe and impurities) | | | | | | | | | | | | | | | | | | | | | | |
|---|---|---|---|---|---|---|---|---|---|---|---|---|---|---|---|---|---|---|---|---|---|---|---|
| | C | Si | Mn | P | S | Cr | Ni | Mo | Cu | Al | N | V | Ti | Co | Ca | Nb | W | Sn | As | Sb | B | Mg | REM |
| 1 | 0.010 | 0.23 | 0.39 | 0.014 | 0.0019 | 12.88 | 6.03 | 2.50 | 1.95 | 0.007 | 0.0189 | 0.04 | 0.111 | 0.02 | 0.0031 | - | - | - | - | - | - | - | - |
| 2 | 0.010 | 0.18 | 0.36 | 0.002 | 0.0015 | 13.85 | 6.01 | 3.41 | 2.04 | 0.010 | 0.0208 | 0.04 | 0.099 | 0.19 | 0.0022 | - | - | - | - | - | - | - | - |
| 3 | 0.011 | 0.26 | 0.35 | 0.002 | 0.0011 | 13.18 | 6.39 | 2.81 | 2.70 | 0.010 | 0.0185 | 0.06 | 0.148 | 0.50 | 0.0039 | - | - | - | - | - | - | - | - |
| 4 | 0.011 | 0.25 | 0.35 | 0.002 | 0.0011 | 13.25 | 6.34 | 2.92 | 2.73 | 0.006 | 0.0180 | 0.04 | 0.130 | 0.30 | 0.0045 | 0.04 | - | - | - | - | - | - | - |
| 5 | 0.015 | 0.24 | 0.37 | 0.002 | 0.0016 | 12.95 | 6.15 | 2.31 | 2.51 | 0.012 | 0.0045 | 0.04 | 0.117 | 0.10 | 0.0022 | - | 0.37 | - | - | - | - | - | - |
| 6 | 0.010 | 0.25 | 0.40 | 0.002 | 0.0014 | 12.51 | 5.99 | 2.05 | 2.15 | 0.006 | 0.0205 | 0.05 | 0.125 | 0.35 | 0.0032 | - | - | 0.0006 | - | - | - | - | - |
| 7 | 0.011 | 0.20 | 0.33 | 0.001 | 0.0012 | 12.89 | 6.20 | 2.20 | 1.89 | 0.008 | 0.0261 | 0.04 | 0.100 | 0.31 | 0.0030 | - | - | - | 0.0020 | - | - | - | - |
| 8 | 0.010 | 0.22 | 0.38 | 0.002 | 0.0011 | 13.22 | 6.41 | 2.67 | 2.05 | 0.011 | 0.0190 | 0.05 | 0.088 | 0.30 | 0.0033 | - | - | - | - | 0.0005 | - | - | - |
| 9 | 0.018 | 0.25 | 0.37 | 0.002 | 0.0024 | 12.51 | 6.44 | 1.35 | 2.24 | 0.012 | 0.0311 | 0.04 | 0.114 | 0.44 | 0.0016 | - | - | - | - | - | 0.0016 | - | - |
| 10 | 0.027 | 0.29 | 0.40 | 0.002 | 0.0021 | 12.93 | 7.22 | 2.66 | 2.68 | 0.010 | 0.0210 | 0.03 | 0.099 | 0.44 | 0.0049 | - | - | - | - | - | - | 0.0016 | - |
| 11 | 0.009 | 0.24 | 0.39 | 0.002 | 0.0024 | 10.55 | 6.16 | 2.84 | 3.28 | 0.009 | 0.0262 | 0.06 | 0.123 | 0.04 | 0.0028 | - | - | - | - | - | - | - | 0.0038 |
| 12 | 0.010 | 0.29 | 0.44 | 0.001 | 0.0019 | 13.21 | 5.94 | 2.35 | 2.38 | 0.005 | 0.0134 | 0.06 | 0.108 | 0.40 | 0.0048 | 0.02 | 0.51 | - | - | - | - | - | - |
| 13 | 0.010 | 0.21 | 0.43 | 0.001 | 0.0014 | 13.08 | 6.40 | 2.61 | 2.62 | 0.006 | 0.0069 | 0.03 | 0.112 | 0.10 | 0.0036 | 0.02 | 0.78 | - | - | - | 0.0004 | - | - |
| 14 | 0.023 | 0.29 | 0.42 | 0.002 | 0.0013 | 13.17 | 6.73 | 2.42 | 2.54 | 0.010 | 0.0138 | 0.04 | 0.133 | 0.40 | 0.0034 | 0.04 | 0.35 | - | - | - | 0.0037 | - | 0.0026 |
| 15 | 0.015 | 0.21 | 0.37 | 0.002 | 0.0018 | 13.31 | 6.49 | 2.25 | 2.34 | 0.010 | 0.0187 | 0.03 | 0.095 | 0.40 | 0.0028 | 0.05 | 0.65 | - | - | - | 0.0025 | 0.0028 | 0.0056 |
| 16 | 0.011 | 0.22 | 0.36 | 0.002 | 0.0016 | 12.05 | 6.12 | 2.14 | 1.87 | 0.006 | 0.0150 | 0.03 | 0.113 | 0.30 | 0.0046 | 0.03 | 0.94 | 0.0011 | 0.0040 | 0.0005 | 0.0039 | 0.0021 | 0.0065 |
| 17 | 0.010 | 0.25 | 0.35 | 0.012 | 0.0012 | 10.78 | 5.97 | 3.14 | 2.95 | 0.028 | 0.0148 | 0.05 | 0.123 | 0.40 | 0.0035 | - | - | - | - | - | - | - | - |
| 18 | 0.009 | 0.24 | 0.43 | 0.011 | 0.0012 | 11.56 | 6.08 | 2.15 | 2.35 | 0.014 | 0.0129 | 0.05 | 0.107 | 0.40 | 0.0041 | - | - | - | - | - | - | - | - |
| 19 | 0.010 | 0.20 | 0.97 | 0.015 | 0.0011 | 12.61 | 6.09 | 1.85 | 2.78 | 0.030 | 0.0111 | 0.05 | 0.105 | 0.20 | 0.0020 | - | - | - | - | - | - | - | - |
| 20 | 0.011 | 0.21 | 0.11 | 0.012 | 0.0012 | 12.27 | 5.89 | 2.01 | 3.14 | 0.029 | 0.0102 | 0.04 | 0.122 | 0.30 | 0.0024 | - | - | - | - | - | - | - | - |

[Table 2]

Table 2

| Test Number | Chemical Composition (unit is mass%; balance is Fe and impurities) | | | | | | | | | | | | | | | | | | | | | | |
|---|---|---|---|---|---|---|---|---|---|---|---|---|---|---|---|---|---|---|---|---|---|---|---|
| | C | Si | Mn | P | S | Cr | Ni | Mo | Cu | Al | N | V | Ti | Co | Ca | Nb | W | Sn | As | Sb | B | Mg | REM |
| 21 | 0.013 | 0.24 | 0.36 | 0.029 | 0.0013 | 11.11 | 5.86 | 2.05 | 2.66 | 0.015 | 0.0081 | 0.03 | 0.126 | 0.40 | 0.0028 | - | - | - | - | - | - | - | - |
| 22 | 0.008 | 0.26 | 0.45 | 0.010 | 0.0012 | 13.25 | 6.98 | 2.43 | 2.56 | 0.048 | 0.0072 | 0.03 | 0.141 | 0.30 | 0.0031 | - | - | - | - | - | - | - | - |
| 23 | 0.009 | 0.18 | 0.31 | 0.013 | 0.0012 | 10.85 | 6.01 | 2.89 | 1.58 | 0.022 | 0.0075 | 0.28 | 0.135 | 0.30 | 0.0022 | - | - | - | - | - | - | - | - |
| 24 | 0.012 | 0.20 | 0.40 | 0.018 | 0.0016 | 12.78 | 6.57 | 2.51 | 2.10 | 0.027 | 0.0085 | 0.04 | 0.125 | 0.10 | 0.0025 | - | 0.01 | - | - | - | - | - | - |
| 25 | 0.013 | 0.25 | 0.39 | 0.015 | 0.0011 | 12.51 | 6.24 | 2.47 | 1.95 | 0.025 | 0.0102 | 0.05 | 0.094 | 0.20 | 0.0030 | - | - | 0.0093 | - | - | - | - | - |
| 26 | 0.010 | 0.19 | 0.32 | 0.011 | 0.0011 | 12.32 | 6.57 | 1.95 | 1.64 | 0.012 | 0.0051 | 0.03 | 0.092 | 0.20 | 0.0018 | - | - | - | 0.0094 | - | - | - | - |
| 27 | 0.010 | 0.20 | 0.34 | 0.003 | 0.0011 | 12.99 | 6.45 | 3.12 | 1.97 | 0.025 | 0.0098 | 0.03 | 0.107 | 0.30 | 0.0045 | - | - | - | - | 0.0098 | - | - | - |
| 28 | 0.008 | 0.25 | 0.39 | 0.008 | 0.0012 | 11.34 | 6.23 | 2.96 | 2.88 | 0.025 | 0.0140 | 0.04 | 0.109 | 0.20 | 0.0040 | - | - | - | - | - | - | 0.0047 | - |
| 29 | 0.015 | 0.29 | 0.39 | 0.001 | 0.0017 | 13.04 | 6.02 | 2.92 | 1.80 | 0.011 | 0.0100 | 0.05 | 0.098 | 0.40 | 0.0039 | - | - | - | - | - | - | - | - |
| 30 | 0.011 | 0.30 | 0.41 | 0.002 | 0.0022 | 13.51 | 5.99 | 2.71 | 2.53 | 0.010 | 0.0202 | 0.06 | 0.135 | 0.20 | 0.0045 | - | 0.66 | - | - | - | - | - | - |
| 31 | 0.021 | 0.23 | 0.37 | 0.002 | 0.0023 | 12.03 | 6.72 | 2.85 | 1.42 | 0.006 | 0.0302 | 0.04 | 0.124 | 0.20 | 0.0018 | - | - | - | - | - | - | - | - |
| 32 | 0.012 | 0.27 | 0.35 | 0.002 | 0.0025 | 12.50 | 6.71 | 2.75 | 2.62 | 0.010 | 0.0213 | 0.04 | 0.109 | 0.10 | 0.0022 | - | - | - | - | - | - | - | - |
| 33 | 0.010 | 0.25 | 0.43 | 0.002 | 0.0024 | 12.46 | 5.85 | 2.31 | 2.35 | 0.008 | 0.0205 | 0.04 | 0.090 | 0.30 | 0.0030 | - | - | - | - | - | - | - | - |
| 34 | 0.008 | 0.20 | 0.40 | 0.001 | 0.0017 | 13.11 | 6.23 | 2.42 | 2.01 | 0.012 | 0.0234 | 0.04 | 0.092 | 0.10 | 0.0028 | - | - | - | - | - | - | - | - |
| 35 | 0.012 | 0.24 | 0.38 | 0.001 | 0.0016 | 12.35 | 6.10 | 2.67 | 2.22 | 0.011 | 0.0155 | 0.04 | 0.120 | 0.20 | 0.0028 | - | - | - | - | - | - | - | - |
| 36 | 0.011 | 0.24 | 0.40 | 0.001 | 0.0014 | 13.18 | 6.01 | 2.85 | 1.95 | 0.009 | 0.0085 | 0.05 | 0.101 | 0.25 | 0.0035 | 0.02 | - | - | - | - | - | - | - |
| 37 | 0.010 | 0.25 | 0.40 | 0.001 | 0.0011 | 13.11 | 5.33 | 1.67 | 2.65 | 0.010 | 0.0097 | 0.04 | 0.110 | 0.38 | 0.0015 | - | - | - | - | - | - | - | - |
| 38 | 0.014 | 0.25 | 0.42 | 0.002 | 0.0021 | 12.57 | 6.47 | 2.36 | 1.94 | 0.008 | 0.0259 | 0.05 | 0.096 | 0.10 | 0.0034 | 0.02 | - | - | - | - | - | - | - |
| 39 | 0.010 | 0.26 | 0.43 | 0.001 | 0.0009 | 12.49 | 6.77 | 2.35 | 1.81 | 0.005 | 0.0319 | 0.04 | 0.120 | 0.30 | 0.0020 | - | - | - | - | - | - | - | - |
| 40 | 0.012 | 0.27 | 0.35 | 0.002 | 0.0015 | 13.26 | 6.23 | 2.48 | 2.04 | 0.006 | 0.0095 | 0.03 | 0.133 | 0.10 | 0.0006 | - | - | - | - | - | - | - | - |
| 41 | 0.036 | 0.22 | 0.39 | 0.002 | 0.0013 | 12.74 | 6.33 | 2.51 | 2.11 | 0.008 | 0.0281 | 0.04 | 0.108 | 0.20 | 0.0029 | - | - | - | - | - | - | - | - |

The molten steel of each test number was produced as follows. The molten steel containing Cr was placed in a ladle and a well-known rough decarburization refining process and Cr reduction treatment process were performed by the AOD process. After the Cr reduction treatment process, a slag removal treatment process for removing slag from the molten steel was performed. In addition, a well-known finishing decarburization refining process and Cr reduction treatment process were performed by the VOD process.

After the Cr reduction treatment process was performed by the VOD process, the molten steel in the ladle was subjected to final compositional adjustment by LT and the temperature adjustment of the molten steel before the starting material production process was performed. For each test number, the molten steel temperature was in the range of 1500 to 1700°C. In addition, Ca was added to the molten steel. After Ca was added, the holding time t (secs) after elapse of the uniform mixing time was adjusted as shown in Table 3. The molten steels having the chemical compositions shown in Table 1 and Table 2 were produced by the above process.

[Table 3]

Table 3

| Test Number | Holding Time t (secs) | LMP | Cooling Rate | YS (MPa) | Microstructure | | Coarse Ca Sulfides (/mm²) | Coarse Cu Precipitates (%) | Service Life (relative value) | Toughness |
|---|---|---|---|---|---|---|---|---|---|---|
| | | | | | Retained γ (%) | Ferrite (%) | | | | |
| 1 | 20 | 17388 | F | 870 | 3 | 0 | 6 | 0.14 | 0.7 | E |
| 2 | 27 | 17562 | F | 874 | 2 | 1 | 6 | 0.15 | 0.7 | E |
| 3 | 20 | 17310 | F | 787 | 4 | 1 | 14 | 0.16 | 1.1 | E |
| 4 | 25 | 17456 | F | 775 | 5 | 1 | 9 | 0.19 | 1.0 | E |
| 5 | 28 | 17245 | F | 924 | 1 | 1 | 5 | 0.16 | 1.1 | E |
| 6 | 25 | 17410 | F | 799 | 3 | 1 | 6 | 0.14 | 0.8 | E |
| 7 | 25 | 17297 | F | 849 | 3 | 0 | 6 | 0.14 | 0.8 | E |
| 8 | 25 | 17159 | F | 855 | 2 | 0 | 6 | 0.14 | 0.8 | E |
| 9 | 29 | 17284 | F | 851 | 2 | 0 | 5 | 0.16 | 0.7 | E |
| 10 | 24 | 17487 | F | 839 | 7 | 0 | 8 | 0.18 | 0.9 | E |
| 11 | 25 | 17153 | F | 933 | 10 | 0 | 6 | 0.13 | 0.7 | E |
| 12 | 25 | 17718 | F | 805 | 1 | 1 | 8 | 0.18 | 1.1 | E |
| 13 | 26 | 17650 | F | 865 | 3 | 0 | 9 | 0.13 | 0.9 | E |
| 14 | 26 | 17543 | F | 893 | 5 | 0 | 9 | 0.13 | 0.9 | E |
| 15 | 25 | 17253 | F | 855 | 4 | 0 | 5 | 0.14 | 1.3 | E |
| 16 | 24 | 17558 | F | 802 | 1 | 0 | 10 | 0.11 | 0.9 | E |
| 17 | 24 | 17162 | F | 955 | 1 | 0 | 21 | 0.16 | 1.7 | E |
| 18 | 24 | 17255 | F | 864 | 1 | 1 | 5 | 0.45 | 1.7 | E |
| 19 | 25 | 17272 | F | 851 | 2 | 0 | 6 | 0.13 | 0.7 | E |
| 20 | 26 | 17437 | F | 795 | 4 | 1 | 7 | 0.15 | 0.7 | E |
| 21 | 25 | 17192 | F | 941 | 0 | 1 | 8 | 0.18 | 0.8 | E |
| 22 | 26 | 17460 | F | 786 | 1 | 0 | 8 | 0.14 | 0.8 | E |
| 23 | 24 | 17509 | F | 921 | 1 | 0 | 8 | 0.13 | 0.7 | E |

(continued)

| Test Number | Holding Time t (secs) | LMP | Cooling Rate | YS (MPa) | Microstructure | | Coarse Ca Sulfides (/mm$^2$) | Coarse Cu Precipitates (%) | Service Life (relative value) | Toughness |
|---|---|---|---|---|---|---|---|---|---|---|
| | | | | | Retained $\gamma$ (%) | Ferrite (%) | | | | |
| 24 | 24 | 17387 | F | 812 | 2 | 1 | 6 | 0.15 | 0.7 | E |
| 25 | 27 | 17255 | F | 840 | 2 | 0 | 9 | 0.16 | 1.0 | E |
| 26 | 25 | 17308 | F | 799 | 4 | 0 | 6 | 0.18 | 0.8 | E |
| 27 | 27 | 17358 | F | 775 | 6 | 4 | 5 | 0.15 | 0.7 | E |
| 28 | 26 | 17230 | F | 862 | 5 | 1 | 6 | 0.16 | 0.7 | E |
| 29 | 27 | 17368 | S | 849 | 0 | 1 | 6 | 0.52 | 0.8 | NA |
| 30 | 19 | 17616 | S | 870 | 3 | 1 | 13 | 0.53 | 1.1 | NA |
| 31 | 25 | 17471 | F | 941 | 3 | 0 | 8 | 0.02 | 0.5 | E |
| 32 | 28 | 16944 | F | 1004 | 4 | 0 | 5 | 0.05 | 0.6 | E |
| 33 | 44 | 17418 | F | 820 | 4 | 0 | 4 | 0.12 | 0.5 | E |
| 34 | 38 | 16931 | F | 988 | 3 | 0 | 4 | 0.10 | 0.3 | E |
| 35 | 121 | 17728 | F | 833 | 6 | 0 | 1 | 0.19 | 0.1 | E |
| 36 | 150 | 17512 | F | 860 | 3 | 1 | 1 | 0.16 | 0.1 | E |
| 37 | 85 | 17909 | F | 749 | 3 | 0 | 2 | 0.24 | 0.2 | E |
| 38 | 79 | 17888 | F | 737 | 6 | 0 | 2 | 0.55 | 0.1 | NA |
| 39 | 29 | 17526 | F | 770 | 3 | 0 | 2 | 0.14 | 0.1 | E |
| 40 | 29 | 17307 | F | 797 | 2 | 0 | 2 | 0.13 | 0.1 | E |
| 41 | 26 | 17121 | F | 916 | 10 | 0 | 8 | 0.22 | 0.9 | NA |

Billets with an outer diameter of 310 mm were produced using the molten steel of each test number. Each of the produced billets was heated to 1250°C, and thereafter was subjected to hot rolling by the Mannesmann process to produce a hollow shell (seamless steel pipe) having an outer diameter of 244.48 mm and a wall thickness of 13.84 mm.

The hollow shell of each test number was subjected to quenching and tempering. For each test number, the quenching was performed by holding the hollow shell at a quenching temperature of 920°C for 10 minutes, and then rapidly cooling the hollow shell. The hollow shell of each test number after quenching was subjected to tempering. For each test number, the tempering temperature was adjusted within the range of 500 to 650°C and the tempering time was adjusted within the range of 30 to 180 minutes so that the yield strength of the steel pipe (seamless steel pipe) after tempering became 110 ksi or more (758 MPa or more). With respect to the tempering performed on the hollow shell of each test number, the Larson-Miller parameter LMP (= (tempering temperature (°C) + 273) × (log(tempering time (mins)/60) + 20)) that was determined based on the tempering temperature and the tempering time is shown as "LMP" in Table 3.

The hollow shell of each test number was cooled to room temperature (25°C) after tempering. For each test number, the cooling rate after tempering is shown in Table 3. Specifically, in the column "Cooling Rate" in Table 3, "F" (fast) means that the cooling rate from the tempering temperature to 300°C was 15°C/min or more. In the column "Cooling Rate" in Table 3, "S" (slow) means that the cooling rate from the tempering temperature to 300°C was less than 15°C/min.

Seamless steel pipes of Test Nos. 1 to 41 were produced by the production process described above.

[Evaluation tests]

The produced seamless steel pipe of each test number was subjected to a tensile test, a microstructure observation test, a coarse Ca sulfides number density measurement test, a coarse Cu precipitates area fraction measurement test, a machinability evaluation test, and a toughness evaluation test.

[Tensile test]

The seamless steel pipe of each test number was subjected to a tensile test in accordance with ASTM E8/E8M (2021). Specifically, a round bar tensile test specimen was prepared from a central portion of the wall thickness of the seamless steel pipe of each test number. In each round bar tensile test specimen, the diameter of the parallel portion was 8.9 mm and the length of the parallel portion was 35.6 mm. The longitudinal direction of the round bar tensile test specimen was parallel to the rolling direction (pipe axis direction) of the seamless steel pipe. A tensile test was carried out at normal temperature (25°C) in atmospheric air using the round bar tensile test specimen of each test number, and the 0.2% offset yield stress (MPa) was determined. The determined 0.2% offset yield stress was defined as the yield strength (MPa). The obtained yield strength of each test number is shown in the column "YS (MPa)" in Table 3.

[Microstructure observation test]

The seamless steel pipe of each test number was subjected to a microstructure observation test, and the volume ratios of retained austenite and ferrite were determined. For the seamless steel pipe of each test number, the volume ratio (%) of retained austenite was determined by the X-ray diffraction method described above. The obtained volume ratio (%) of retained austenite in the seamless steel pipe of each test number is shown in the column "Retained $\gamma$ (%)" in Table 3. In addition, for the seamless steel pipe of each test number, the volume ratio (%) of ferrite was determined by the aforementioned point counting method in accordance with JIS G 0555 (2015). The volume ratio (%) of ferrite obtained for each test number is shown in the column "Ferrite (%)" in Table 3.

[Coarse Ca sulfides number density measurement test]

The seamless steel pipe of each test number was subjected to a coarse Ca sulfides number density measurement test to determine the number density of Ca sulfides having an equivalent circular diameter of 1.0 $\mu$m or more (coarse Ca sulfides). The number density of coarse Ca sulfides was determined by the method described above using a test specimen prepared from a central portion of the wall thickness of the seamless steel pipe of each test number. The number density (/mm$^2$) of coarse Ca sulfides obtained for each test number is shown in the column "Coarse Ca Sulfides (/mm$^2$)" in Table 3.

[Coarse Cu precipitates area fraction measurement test]

The seamless steel pipe of each test number was subjected to a coarse Cu precipitates area fraction measurement test to determine the area fraction of Cu precipitates with an area of 0.20 $\mu$m$^2$ or more (coarse Cu precipitates).

The area fraction of coarse Cu precipitates was determined by the method described above using a test specimen prepared from a central portion of the wall thickness of the seamless steel pipe of each test number. The area fraction (%) of coarse Cu precipitates obtained for each test number is shown in the column "Coarse Cu Precipitates (%)" in Table 3.

[Machinability evaluation test]

The seamless steel pipe of each test number was subjected to outer circumferential lathe turning by the method described above, and the machinability was evaluated. In the present Examples, service life was used as an index for evaluating the machinability. Specifically, a hard metal equivalent to P10 defined in JIS B 4053 (2013) was used as a cutting tool. The cutting conditions were set as follows: cutting speed: 100 m/min, feed rate: 0.15 mm/rev, cut depth: 0.75 mm, and lubricant: not used. The quality of the finished surface of the steel pipe of each test number was evaluated, according to the method described above, by visual observation of the finished surface of the steel pipe and based on the maximum height Rz measured using a surface roughness tester in accordance with JIS B 0601 (2013).

As described above, when the maximum height Rz of the finished surface of the steel pipe was more than 30 $\mu$m, the outer circumferential lathe turning was ended. In the present Examples, the distance for which outer circumferential lathe turning was performed from the time that the outer circumferential lathe turning was started using a new tool until the maximum height Rz of the finished surface of the steel pipe became more than 30 $\mu$m was defined as the service life for each test number. In addition, the service life (relative value) was determined by taking the service life of a steel pipe equivalent to API 5CT P110, specifically, a steel pipe containing C: 0.20 to 0.30%, Si: 1.0% or less, Mn: 2.0% or less, P: 0.03% or less, S: 0.03% or less, Cr: 1.5% or less, and Mo: 1.0% or less, which was obtained when the steel pipe was subjected to similar outer circumferential lathe turning as 1.0. The service life (relative value) obtained for each test number is shown in the column "Service Life (relative value)" in Table 3.

[Toughness evaluation test]

The seamless steel pipe of each test number was subjected to a Charpy impact test in accordance with ASTM E23 (2018) to evaluate the toughness. A full-size 2-mm V-notch test specimen for the Charpy impact test was prepared in accordance with API 5CRA (2010) from a central portion of the wall thickness of the seamless steel pipe of each test number. The longitudinal direction of the test specimen was perpendicular to the rolling direction (pipe axis direction) of the seamless steel pipe. Further, the notched surface was perpendicular to the rolling direction (pipe axis direction) of the seamless steel pipe. Three test specimens prepared for each test number were cooled to -10°C and subjected to a Charpy impact test in accordance with ASTM E23 (2016), and the absorbed energy (J) was determined. The arithmetic average value of the absorbed energy values determined for the three test specimens was defined as the absorbed energy (J). If the obtained absorbed energy (J) was 40 J or more, the seamless steel pipe was evaluated as having excellent toughness ("E" (Excellent) in Table 3). If the obtained absorbed energy (J) was less than 40 J, the seamless steel pipe was evaluated as not having excellent toughness ("NA" (Not Acceptable) in Table 3). The results of the evaluation of the toughness of each test number are shown in the column "Toughness" in Table 3.

[Evaluation results]

Referring to Table 1 to Table 3, for each of the seamless steel pipes of Test Nos. 1 to 34, the chemical composition was appropriate and the production method also satisfied the conditions of the preferred production method described above. As a result, in these seamless steel pipes the yield strength was 758 MPa or more. Further, in these seamless steel pipes, in the microstructure, the amount of retained austenite was 0 to 15% by volume and the amount of ferrite was 0 to 5% by volume. In addition, in these seamless steel pipes the number density of coarse Ca sulfides was 3 /mm$^2$ or more. As a result, for each of these seamless steel pipes the service life (relative value) was 0.3 or more, and thus these seamless steel pipes had excellent machinability. That is, each of the seamless steel pipes of Test Nos. 1 to 34 had a yield strength of 110 ksi or more and had excellent machinability.

Further, in the seamless steel pipes of Test Nos. 1 to 32, the number density of coarse Ca sulfides was 5 /mm$^2$ or more. As a result, for each of these seamless steel pipes the service life (relative value) was 0.5 or more, and thus these seamless steel pipes had further excellent machinability.

Furthermore, in the seamless steel pipes of Test Nos. 1 to 28 and 33, the content of Cu was 1.50 to 3.50%, and the area fraction of coarse Cu precipitates was more than 0.10 to 0.50%. Consequently, for each of these seamless steel pipes the service life (relative value) was 0.5 or more, and thus these seamless steel pipes had further excellent machinability. In addition, as a result, for each of these seamless steel pipes the result of the evaluation of the toughness was "E", and thus these seamless steel pipes had excellent toughness.

In addition, in the seamless steel pipes of Test Nos. 1 to 28, the content of Cu was 1.50 to 3.50%, the number density of coarse Ca sulfides was 5 /mm$^2$ or more, and the area fraction of coarse Cu precipitates was more than 0.10 to 0.50%. Consequently, for each of these seamless steel pipes the service life (relative value) was 0.7 or more, and thus these seamless steel pipes had extremely excellent machinability. In addition, as a result, for each of these seamless steel pipes the result of the evaluation of the toughness was "E", and thus these seamless steel pipes had excellent toughness.

On the other hand, for the seamless steel pipes of Test Nos. 35 and 36, the holding time t was too long. Consequently, in these seamless steel pipes the number density of coarse Ca sulfides was less than 3 /mm$^2$. As a result, for each of these seamless steel pipes the service life (relative value) was less than 0.3, and thus these seamless steel pipes did not have excellent machinability.

For the seamless steel pipe of Test No. 37, the holding time t was too long, and in addition the LMP for the tempering was more than 17800. Consequently, the yield strength of this seamless steel pipe was less than 758 MPa, and thus this seamless steel pipe did not have a yield strength of 110 ksi or more. Furthermore, in this seamless steel pipe the number density of coarse Ca sulfides was less than 3 /mm$^2$. As a result, for this seamless steel pipe the service life (relative value) was less than 0.3, and thus this seamless steel pipe did not have excellent machinability.

For the seamless steel pipe of Test No. 38, the holding time t was too long, and in addition the LMP for the tempering was more than 17800. Consequently, the yield strength of this seamless steel pipe was less than 758 MPa, and thus this seamless steel pipe did not have a yield strength of 110 ksi or more. Further, in this seamless steel pipe the number density of coarse Ca sulfides was less than 3 /mm$^2$. As a result, for this seamless steel pipe the service life (relative value) was less than 0.3, and thus this seamless steel pipe did not have excellent machinability. Furthermore, in this seamless steel pipe the area fraction of coarse Cu precipitates was more than 0.50%. As a result, for this seamless steel pipe, in addition, the result of the evaluation of the toughness was "NA", and thus this seamless steel pipe did not have excellent toughness.

In the seamless steel pipe of Test No. 39, the content of S was too low. Consequently, in this seamless steel pipe the number density of coarse Ca sulfides was less than 3 /mm$^2$. As a result, for this seamless steel pipe the service life (relative value) was less than 0.3, and thus this seamless steel pipe did not have excellent machinability.

In the seamless steel pipe of Test No. 40, the content of Ca was too low. Consequently, in this seamless steel pipe the number density of coarse Ca sulfides was less than 3 /mm$^2$. As a result, for this seamless steel pipe the service life (relative value) was less than 0.3, and thus this seamless steel pipe did not have excellent machinability.

In the seamless steel pipe of Test No. 41, the content of C was too high. As a result, for this seamless steel pipe the result of the evaluation of the toughness was "NA", and thus this seamless steel pipe did not have excellent toughness.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range that does not depart from the technical spirit of the present disclosure.

Note that, the gist of the martensitic stainless steel pipe according to the present embodiment can also be described as follows.

[1] A martensitic stainless steel pipe consisting of, in mass%,

C: less than 0.030%,
Si: 1.00% or less,
Mn: 1.00% or less,
P: 0.030% or less,
S: 0.0010 to 0.0050%,
Cr: 10.00 to 14.00%,
Ni: 5.00 to 7.50%,
Mo: 1.10 to 3.50%,
Cu: 1.00 to 3.50%,
Al: 0.005 to 0.050%,
N: 0.0030 to 0.0500%,
V: 0.01 to 0.30%,
Ti: 0.020 to 0.150%,
Co: 0.01 to 0.50%,
Ca: 0.0010 to 0.0050%, and
the balance: Fe and impurities,
wherein:

the microstructure consists of, in volume percent, retained austenite in an amount of 0 to 15% and ferrite in an amount of 0 to 5%, with the balance being tempered martensite;
a yield strength is 758 MPa or more; and
a number density of Ca sulfides in which a content of Ca is 20% by mass or more and a content of S is 10% by mass or more and which have an equivalent circular diameter of 1.0 $\mu$m or more is 3 /mm$^2$ or more.

[2] A martensitic stainless steel pipe containing, in mass%,

C: less than 0.030%,
Si: 1.00% or less,
Mn: 1.00% or less,
P: 0.030% or less,
S: 0.0010 to 0.0050%,
Cr: 10.00 to 14.00%,
Ni: 5.00 to 7.50%,
Mo: 1.10 to 3.50%,
Cu: 1.00 to 3.50%,
Al: 0.005 to 0.050%,
N: 0.0030 to 0.0500%,
V: 0.01 to 0.30%,
Ti: 0.020 to 0.150%,
Co: 0.01 to 0.50%, and
Ca: 0.0010 to 0.0050%,
and further containing one or more elements selected from a group consisting of:

Nb: 0.15% or less,
W: 1.50% or less,
Sn: 0.0100% or less,
As: 0.0100% or less,
Sb: 0.0100% or less,
B: 0.0050% or less,
Mg: 0.0050% or less, and
rare earth metal: 0.0100% or less,
with the balance being Fe and impurities,
wherein:

the microstructure consists of, in volume percent, retained austenite in an amount of 0 to 15% and ferrite in an amount of 0 to 5%, with the balance being tempered martensite;
a yield strength is 758 MPa or more; and
a number density of Ca sulfides in which a content of Ca is 20% by mass or more and a content of S is 10% by mass or more and which have an equivalent circular diameter of 1.0 $\mu$m or more is 3 /mm$^2$ or more.

[3] The martensitic stainless steel pipe according to [2], containing one or more elements selected from a group consisting of:

Nb: 0.15% or less, and
W: 1.50% or less.

[4] The martensitic stainless steel pipe according to [2] or [3], containing one or more elements selected from a group consisting of:

Sn: 0.0100% or less,
As: 0.0100% or less, and
Sb: 0.0100% or less.

[5] The martensitic stainless steel pipe according to any one of [2] to [4], containing one or more elements selected from a group consisting of:

B: 0.0050% or less,
Mg: 0.0050% or less, and
rare earth metal: 0.0100% or less.

[6] The martensitic stainless steel pipe according to any one of [1] to [5], containing:

Cu: 1.50 to 3.50%,
wherein an area fraction of Cu precipitates with an area of 0.20 $\mu m^2$ or more is more than 0.10 to 0.50%.

**Claims**

1. A martensitic stainless steel pipe consisting of, in mass%,

C: less than 0.030%,
Si: 1.00% or less,
Mn: 1.00% or less,
P: 0.030% or less,
S: 0.0010 to 0.0050%,
Cr: 10.00 to 14.00%,
Ni: 5.00 to 7.50%,
Mo: 1.10 to 3.50%,
Cu: 1.00 to 3.50%,
Al: 0.005 to 0.050%,
N: 0.0030 to 0.0500%,
V: 0.01 to 0.30%,
Ti: 0.020 to 0.150%,
Co: 0.01 to 0.50%,
Ca: 0.0010 to 0.0050%,
Nb: 0 to 0.15%,
W: 0 to 1.50%,
Sn: 0 to 0.0100%,
As: 0 to 0.0100%,
Sb: 0 to 0.0100%,
B: 0 to 0.0050%,
Mg: 0 to 0.0050%,
rare earth metal: 0 to 0.0100%, and
the balance: Fe and impurities,
wherein:

a microstructure consists of, in volume percent, retained austenite in an amount of 0 to 15% and ferrite in an amount of 0 to 5%, with the balance being tempered martensite;
a yield strength is 758 MPa or more; and
a number density of Ca sulfides in which a content of Ca is 20% by mass or more and a content of S is 10% by mass or more and which have an equivalent circular diameter of 1.0 $\mu m$ or more is 3 /mm$^2$ or more.

2. The martensitic stainless steel pipe according to claim 1, containing one or more elements selected from a group consisting of:

Nb: 0.01 to 0.15%,
W: 0.01 to 1.50%,
Sn: 0.0001 to 0.0100%,
As: 0.0001 to 0.0100%,
Sb: 0.0001 to 0.0100%,
B: 0.0001 to 0.0050%,
Mg: 0.0001 to 0.0050%, and
rare earth metal: 0.0001 to 0.0100%.

3. The martensitic stainless steel pipe according to claim 1 or claim 2, containing:

Cu: 1.50 to 3.50%,
wherein an area fraction of Cu precipitates with an area of 0.20 $\mu$m$^2$ or more is more than 0.10 to 0.50%.

## INTERNATIONAL SEARCH REPORT

| International application No. |
| --- |
| **PCT/JP2022/036441** |

**A.    CLASSIFICATION OF SUBJECT MATTER**

*C21C 7/00*(2006.01)i; *C21D 8/10*(2006.01)i; *C21D 9/08*(2006.01)i; *C22C 38/00*(2006.01)i; *C22C 38/60*(2006.01)i
FI:    C22C38/00 302Z; C22C38/60; C21D8/10 D; C21D9/08 E; C21C7/00 B

According to International Patent Classification (IPC) or to both national classification and IPC

**B.    FIELDS SEARCHED**

Minimum documentation searched (classification system followed by classification symbols)

C21C7/00; C21D8/10; C21D9/08; C22C38/00-38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/067247 A1 (NIPPON STEEL CORPORATION) 02 April 2020 (2020-04-02) | 1-3 |
| A | WO 2020/071344 A1 (NIPPON STEEL CORPORATION) 09 April 2020 (2020-04-09) | 1-3 |
| A | JP 2015-132014 A (KOBE STEEL LTD) 23 July 2015 (2015-07-23) | 1-3 |
| A | JP 2004-2951 A (DAIDO STEEL CO LTD) 08 January 2004 (2004-01-08) | 1-3 |
| P, A | WO 2021/199368 A1 (NIPPON STEEL CORPORATION) 07 October 2021 (2021-10-07) | 1-3 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 November 2022** | **06 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/036441**

| Patent document cited in search report | | | Publication date (day/month/year) | Patent family member(s) | | | Publication date (day/month/year) |
|---|---|---|---|---|---|---|---|
| WO | 2020/067247 | A1 | 02 April 2020 | US | 2021/0238705 | A1 | |
| | | | | EP | 3859031 | A1 | |
| WO | 2020/071344 | A1 | 09 April 2020 | US | 2021/0317556 | A1 | |
| | | | | EP | 3862451 | A1 | |
| JP | 2015-132014 | A | 23 July 2015 | US | 2016/0244865 | A1 | |
| | | | | EP | 3081663 | A1 | |
| | | | | CN | 105765098 | A | |
| | | | | KR | 10-2016-0083936 | A | |
| JP | 2004-2951 | A | 08 January 2004 | (Family: none) | | | |
| WO | 2021/199368 | A1 | 07 October 2021 | (Family: none) | | | |

Form PCT/ISA/210 (patent family annex) (January 2015)

**EP 4 411 001 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002241902 A
- JP 2009120954 A
- WO 2017168874 A